(19) Europäisches Patentamt
European Patent Office
Office européen des brevets

(11) **EP 3 668 656 B1**

(12) **EUROPÄISCHE PATENTSCHRIFT**

(45) Veröffentlichungstag und Bekanntmachung des Hinweises auf die Patenterteilung:
**24.07.2024 Patentblatt 2024/30**

(21) Anmeldenummer: **18752778.3**

(22) Anmeldetag: **15.08.2018**

(51) Internationale Patentklassifikation (IPC):
**B05D 3/06** *(2006.01)*  **B05D 5/02** *(2006.01)*
**B05D 3/02** *(2006.01)*  **B05D 5/06** *(2006.01)*

(52) Gemeinsame Patentklassifikation (CPC):
**B05D 5/02; B05D 3/0209; B05D 3/067;** B05D 5/06

(86) Internationale Anmeldenummer:
**PCT/EP2018/072088**

(87) Internationale Veröffentlichungsnummer:
**WO 2019/034675 (21.02.2019 Gazette 2019/08)**

(54) **VERFAHREN ZUR HERSTELLUNG MATTER BESCHICHTUNGEN AUF FLÄCHIGEN SUBSTRATEN**

PROCESS FOR PRODUCING MATT COATINGS ON SHEETLIKE SUBSTRATES

PROCÉDÉ DE PRODUCTION DE REVÊTEMENTS MATS SUR DES SUBSTRATS PLATS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2017 EP 17186474**

(43) Veröffentlichungstag der Anmeldung:
**24.06.2020 Patentblatt 2020/26**

(73) Patentinhaber: **BASF SE**
**67056 Ludwigshafen am Rhein (DE)**

(72) Erfinder:
• **BECKER, Axel**
**67056 Ludwigshafen (DE)**
• **BERGER, Sebastian**
**67056 Ludwigshafen (DE)**
• **STEIN, Stefanie**
**67056 Ludwigshafen (DE)**

(74) Vertreter: **BASF IP Association**
**BASF SE**
**GBI-C006**
**67056 Ludwigshafen (DE)**

(56) Entgegenhaltungen:
EP-A1- 2 418 019    EP-A1- 2 703 092
WO-A1-2012/013364    WO-A1-2013/092521
DE-A1- 4 439 350    US-A- 4 411 931

**Beschreibung**

Die vorliegende Erfindung betrifft ein Verfahren zur Herstellung matter Beschichtungen auf flächigen Substraten, insbesondere auf nicht-porösen Substraten, wie Holz, Holzwerkstoffe, Metalle und Kunststoffe, unter Verwendung von durch UV-Strahlung härtbaren, flüssigen Zusammensetzungen.

Die Verwendung von Beschichtungssystemen, die durch Einwirkung aktinischer Strahlung ausgehärtet werden (sogenannte strahlenhärtbare bzw. strahlungshärtbare Beschichtungssysteme), ist eine seit langem etablierte Technologie zur Herstellung von hochwertigen Beschichtungen. Eine Übersicht findet man beispielsweise in P. Glöckner et al. "Radiation Curing for Coatings and Printing Inks", Vincentz Network GmbH, Hannover 2008. Bei derartigen Beschichtungssystemen handelt es sich um flüssige Formulierungen, die Oligomere oder Polymere mit mehreren ethylenisch ungesättigten Doppelbindungen, häufig in Form von Acrylgruppen ($CH_2$=CH-C(O)-Gruppen), und gegebenenfalls niedermolekulare ethylenisch ungesättigte Monomere enthalten. Zur Erzeugung der Beschichtungen werden die flüssigen Beschichtungen auf die zu beschichtende Oberfläche des Substrats aufgebracht, und die dabei erhaltene Lackschicht wird anschließend durch Bestrahlung mit aktinischer Strahlung, wie z. B. UV-Strahlung oder auch Elektronenstrahlung (EB-Strahlung), ausgehärtet. Hierbei findet eine radikalische Polymerisation der ethylenisch ungesättigten Doppelbindungen unter Ausbildung eines vernetzen Polymerfilms statt.

Eine Ausführungsform strahlenhärtbarer Beschichtungssysteme sind Formulierungen, bei denen im Wesentlichen alle Bestandteile, d. h. mindestens 80 Gew.-%, insbesondere mindestens 90 Gew.-% der Bestandteile der Formulierung, durch radikalische Polymerisation vernetzen. Diese Beschichtungssysteme enthalten typischerweise keine nicht-polymerisierbaren flüchtigen Bestandteile (VOC) und werden auch als 100%-Systeme bezeichnet. Eine weitere Ausführungsform strahlenhärtbarer Beschichtungssysteme sind wässrige Formulierungen, welche diejenigen Bestandteile, die die Beschichtung bilden, in emulgierter Form enthalten. Bei Anwendung dieser Formulierungen findet vor der eigentlichen Härtung durch Bestrahlung eine physikalische Trocknung statt, um das Wasser und flüchtige Bestandteile aus der beim Aufbringen der Formulierung resultierenden "nassen Lackschicht" zu entfernen. Beiden Formulierungstypen ist gemein, dass die auszuhärtende Lackschicht zu mindestens 80 Gew.- %, insbesondere zu mindestens 90 Gew.-%, bezogen auf die Gesamtmasse der Bestandteile dieser Lackschicht, aus der Bestandteilen bestehen, die bei der Bestrahlung durch eine radikalische Polymerisation vernetzen.

Durch die weitgehende Abwesenheit flüchtiger Bestandteile beim Bestrahlen reduziert sich die aufgetragene Lackschichtstärke dieser Beschichtungssysteme während des Härtungsprozesses nicht oder nur geringfügig. Dieser geringfügige Schrumpf führt zu sehr glatten, hochglänzenden Oberflächen und erschwert die Erzeugung matter Oberflächen durch einfache Zugabe herkömmlicher Mattierungsmittel zur Formulierung.

Verschiedentlich wurde über Verfahren berichtet, bei denen man zur Erzeugung stumpfmatter Oberflächen (z. B. Glanzgrad < 5 GU in 85° Winkelgeometrie, bestimmt nach DIN EN ISO 2813:2015-02) strahlenhärtbare Beschichtungssysteme mit UVC-Strahlung im Wellenlängenbereich von 150 bis < 250 nm bestrahlt, wie beispielsweise in DE 19842510 beschrieben. Durch die Vorbehandlung mit UVC-Strahlung wird eine Mikrofaltung der Beschichtung photochemisch erzeugt. Diese Mikrofaltung ist verantwortlich für eine stumpfmatte Oberfläche. Verbesserte Verfahren, die auf diesem Prinzip basieren, werden in DE 102006042063 sowie von Schubert et al., Farbe + Lack 117/5 (2011), S. 21 ff., Bauer et al., Progress in Org. Coatings 69 (2010), S. 287-293, und Bauer et al., Progress in Org. Coatings 64 (2009), S. 474-481 beschrieben. Hierbei wird zunächst in der Oberfläche der ungehärteten Lackschicht durch Bestrahlung mit UVC-Strahlung eine Mikrofaltung erzeugt. Anschließend erfolgt die Durchhärtung der Lackschicht unter der gefalteten Oberfläche mit herkömmlichen UV-Strahlern wie beispielsweise Quecksilber-Mitteldruckstrahlern oder Elektronenstrahlern. Mit den vorgenannten Verfahren lassen sich allerdings nur stumpfmatte Oberflächen mit geringem Glanzgrad erzeugen. Insbesondere ist es auf diese Weise nicht möglich, Beschichtungen mit Glanzgraden oberhalb von 10 GU in der 60° Winkelgeometrie, bestimmt nach DIN EN ISO 2813:2015-02, zu erzeugen.

Die WO 2013/092521 beschreibt ein Verfahren zur Herstellung homogen mattierter Beschichtungen auf Basis strahlenhärtbarer Beschichtungssysteme. Bei diesem Verfahren bringt man zunächst eine sogenannte 100%-Lackformulierung auf die zu beschichtende Oberfläche des Substrats auf. Diese Nasslackschicht wird anschließend mit UV-Licht der Wellenlänge von 200 bis 420 nm und einer Strahlendosis von 25 bis 120 mJ/$cm^2$ bestrahlt, wobei man eine angelierte Lackschicht erhält. Diese wird anschließend sukzessive mit UVC-Licht der Wellenlänge von 120 bis 230 nm bestrahlt und anschließend mittels aktinischer Strahlung ausgehärtet.

Das vorgenannte Verfahren führt ebenfalls nur zu stumpfmatten Oberflächen mit geringem Glanzgrad und ist zudem auf Beschichtungen mit Beschichtungsdicken oberhalb 20 $\mu$m beschränkt.

Für viele Anwendungsbereiche ist eine weiche bzw. warme oder samtige Haptik, d. h. ein sogenannter Soft-Feel Effekt, derartiger matter Oberflächen gewünscht. Die auf Basis strahlenhärtbarer Beschichtungssysteme hergestellten matten Oberflächen weisen jedoch typischerweise eine harte, sich kalt anfühlende Oberfläche auf und sind daher bezüglich des Soft-Feel Effekts nicht zufriedenstellend. Das weiche Gefühl beim Berühren einer Oberfläche hängt maßgeblich von der Kontaktfläche und damit mit der Wärmeübertragung zwischen Haut und Oberfläche ab. Es lässt sich verallgemeinern, dass je geringer die Kontaktfläche ist, desto eher hat man das Gefühl, eine samtige Oberfläche zu fühlen.

Es besteht daher Bedarf an Beschichtungsverfahren auf Basis strahlungshärtbarer Beschichtungssysteme, die zu matten Beschichtungen mit einstellbarem Soft-Feel Effekt führen. Außerdem besteht Bedarf an Beschichtungsverfahren, die es erlauben, Beschichtungen bereitzustellen, die höhere Glanzgrade als stumpfmatte Beschichtungen und insbesondere einen Glanzgrad von wenigstens 10 GU bei 65° Winkelgeometrie aufweisen. Insbesondere besteht ein Bedarf an Beschichtungsverfahren auf Basis sogenannter 100%-Systeme, da hier die Mattierung und ein Soft-Feel-Effekt besonders schwierig zu erzielen sind.

Es wurde überraschenderweise gefunden, dass man durch das im Folgenden näher beschriebene Verfahren matte Oberflächen mit höheren Glanzgraden bis hin zu Seidenglanz und/oder einer angenehmen Haptik herstellen kann. Insbesondere wurde gefunden, dass die Einstellung einer angenehmen Haptik dann möglich ist, wenn wenigstens eines der folgenden Merkmale (A), (B) und/oder (C) erfüllt ist:

(A) Die Anzahl ethylenisch ungesättigter Doppelbindungen in der Lackformulierung, bezogen auf die in der Lackformulierung F enthaltenen, die Beschichtung bildenden Bestandteile, liegt im Bereich von 3,0 bis 8,0 mol/kg, insbesondere im Bereich von 3,0 bis 6,5 mol/kg;

(B) die Lackformulierung F enthält wenigstens ein Oligomer oder Polymer in einer Menge von wenigstens 30 Gew.-%, insbesondere wenigstens 40 Gew.-%, bezogen auf die härtbaren Bestandteile der Lackformulierung, wobei bei dem Oligomer bzw. dem Polymer oder einem Gemisch davon der Quotient von Netzbogenlänge $\alpha$ zu der Onset-Temperatur $T_0$ in Kelvin des Glasübergangs, bestimmt mittels Dynamischer Differenzthermoanalyse nach DIN EN ISO 11357-2:2014, d. h. der Quotient $\alpha/T_0$ wenigstens 1,2 beträgt; und/oder

(C) der massenmittlere Quotient $\alpha/T_0$, gemittelt über die Gewichtsanteile aller härtbaren Bestandteile der Lackformulierung F, beträgt wenigstens 1,0, vorzugsweise wenigstens 1,1, insbesondere wenigstens 1,2.

Außerdem wurde überraschenderweise gefunden, dass man den Glanzgrad matter Beschichtungen steuern und höhere Glanzgrade als stumpfmatt erzielen kann, wenn die Lackformulierung wenigstens ein aromatisches Epoxyacrylat in einer Menge von wenigstens 20 Gew.-%, speziell wenigstens 30 Gew.-% und ganz speziell zu wenigstens 40 Gew-%, bezogen auf das Gesamtgewicht der in der Lackformulierung enthaltenen, härtbaren Bestandteile enthält.

Dementsprechend betrifft die vorliegende Erfindung ein Verfahren zur Herstellung matter Beschichtungen auf flächigen Substraten, das die im Folgenden angegebenen, aufeinander folgenden Schritte i. - iv. umfasst:

i. Bereitstellen einer ungehärteten Lackschicht einer durch UV-Strahlung härtbaren, flüssigen Lackformulierung F auf der Oberfläche des zu beschichteten Substrats;

ii. Bestrahlung der Lackschicht mit UV-Strahlung, die im Wesentlichen im Wellenlängenbereich von 250 bis 420 nm liegt, mit einer Strahlendosis, die zu einer Teilhärtung der Lackschicht führt;

iii. Bestrahlung der teilgehärteten Lackschicht mit UV-Strahlung im Wellenlängenbereich von 150 bis < 250 nm unter Inertgas;

iv. Bestrahlung der Lackschicht mit UV-Strahlung, die im Wesentlichen im Wellenlängenbereich von 250 bis 420 nm liegt, oder mit Elektronenstrahlung, mit einer Strahlendosis, die zu Aushärtung der Lackschicht führt;

wobei die Lackformulierung F zu wenigstens 80 Gew.-%, bezogen auf das Gesamtgewicht der die Beschichtung bildenden Bestandteile der Lackformulierung F, aus einem oder mehreren härtbaren Bestandteilen besteht, die ethylenisch ungesättigte Doppelbindungen aufweisen, die Lackformulierung F außerdem wenigstens einen Photoinitiator enthält, und die Lackformulierung F wenigstens ein Oligomer oder Polymer, das im Mittel wenigstens 1,5, insbesondere wenigstens 1,8 ethylenische Doppelbindungen pro Molekül trägt und ein zahlenmittleres Molekulargewicht $M_n$ von wenigstens 450 Dalton aufweist, vorzugsweise als Hauptbestandteil der härtbaren Bestandteile, enthält, mit der Maßgabe, dass die Lackformulierung F wenigstens eines der folgenden Merkmale (A), (B) oder (C) und gegebenenfalls das Merkmal (D) erfüllt:

(A) Die Anzahl ethylenisch ungesättigter Doppelbindungen, bezogen auf die in der Lackformulierung F enthaltenen, die Beschichtung bildenden Bestandteile, liegt im Bereich von 3,0 bis 8,0 mol/kg, insbesondere im Bereich von 3,0 bis 6,5 mol/kg;

(B) die Lackformulierung F enthält wenigstens 30 Gew.-%, insbesondere wenigstens 40 Gew.-%, bezogen auf die darin enthaltenen härtbaren Bestandteile, ein Oligomer oder Polymer oder ein Gemisch von Oligomeren und/oder Polymeren, bei dem der Quotient $\alpha/T_0$ von berechneter Netzbogenlänge $\alpha$ in g/mol zu der Onset-Temperatur $T_0$ in Kelvin des Glasübergangs, bestimmt mittels Dynamischer Differenzthermoanalyse nach DIN EN ISO 11357-2:2014, d. h. der Quotient $\alpha/T_0$ beträgt wenigstens 1,2, vorzugsweise wenigstens 1,3, insbesondere wenigstens 1,5 und speziell wenigstens 1,7;

(C) der massenmittlere Quotient $\alpha/T_0$, gemittelt über die Gewichtsanteile aller härtbaren Bestandteile der Lackformulierung F, beträgt wenigstens 1,0, vorzugsweise wenigstens 1,1, insbesondere wenigstens 1,2;

(D) die Lackformulierung F enthält wenigstens ein aromatisches Epoxyacrylat in einer Menge von wenigstens 20 Gew.-%, insbesondere in einer Menge von wenigstens 30 Gew.-% und speziell in einer Menge von wenigstens 40 Gew-%, bezogen auf das Gesamtgewicht der in der Lackformulierung F enthaltenen härtbaren Bestandteile.

Während die Merkmale (A), (B) und (C) alleine oder vor allem in Kombination für eine angenehme Haptik, d. h. einen sogenannten Soft-Feel Effekt verantwortlich sind, führt vor allem das Merkmal (D) zu Beschichtungen mit höheren Glanzgraden, insbesondere, wenn die Lackformulierung F zusätzlich wenigstens ein Mattierungsmittel enthält.

Das erfindungsgemäße Verfahren erlaubt es, über die Merkmale (A), (B) und (C) in Verbindung mit der Abfolge der Bestrahlungsschritte ii) bis iv) die gewünschte Haptik von matten Beschichtungen einzustellen, ohne dass Einbußen in der mechanischen Stabilität und chemischen Widerstandsfähigkeit der Oberfläche in Kauf genommen werden müssen. Hierbei führen insbesondere niedrigere Werte im Merkmal (A), ebenso wie höhere Werte bei den Merkmalen (B) und (C), zu matten Oberflächen mit einer weicheren Haptik, während höhere Werte im Merkmal (A) und/oder niedrigere Werte in den Merkmalen (B) und (C) zu einer weniger weichen Haptik führen. Hier und im Folgenden wird die Weichheit der Haptik auch als Soft-Feel bezeichnet. Ein starker Soft-Feel Effekt ist synonym mit einer sehr weichen Haptik. Das Ausmaß des Soft-Feel Effekts korreliert mit der Gleitreibung auf schiefer Ebene dahingehend, dass eine hohe Gleitreibung für einen starken Soft-Feel Effekt steht. Zur Bestimmung der Gleitreibung auf schiefer Ebene beschichtet man eine Glasplatte mit der Lackformulierung und härtet die Beschichtung durch UV-Strahlung aus. Anschließend setzt man auf die Glasplatte (18*32 cm) ein definiertes Gewicht, z. B. 1 kg, zylindrisch mit 5 cm Bodendurchmesser, das auf der Auflagefläche (z. B. 20 cm$^2$) mit einer gleitfördernden Folie (z. B. Klebeetikett Fa. Avery; Zweckform 3425) beschichtet ist und bestimmt die Neigungshöhe, ab dem das Gewicht zu gleiten beginnt.

Das erfindungsgemäße Verfahren ermöglicht es außerdem, nicht nur stumpf-matte Beschichtungen mit Glanzgraden GU(60°) unterhalb 5 herzustellen sondern auch Beschichtungen mit höheren Glanzgraden, d. h. Glanzgraden GU(60°) von oberhalb 5, insbesondere von wenigstens 10 GU(60°), z. B. bis hin zu seidenglänzenden Beschichtungen mit einem Glanzgrad GU(60°) von 70. Unter dem Glanzgrad GU versteht man hier und im Folgenden den in Reflektionsgeometrie nach DIN EN ISO 2813:2015-02 gemessenen Glanzgrad GU. Der Glanzgrad wird typischerweise bei einem Reflektionswinkel von 20°, 60° oder 85° gemessen und wird dementsprechend als Glanzgrad GU für den jeweiligen Winkel angegeben. Der Glanzgrad GU(60°) bezieht sich somit auf den im Winkel von 60° gemessenen Glanzgrad. Die Einstellung des Glanzgrades gelingt hierbei insbesondere durch das Merkmal (D) in Verbindung mit der Abfolge der Bestrahlungsschritte ii) bis iv). Hierbei gilt, dass höhere Anteile an aromatischem Epoxyacrylat, bezogen auf die härtbaren Bestandteile in der Lackformulierung F, zu höheren Glanzgraden führen, ohne dass Einbußen in der mechanischen Stabilität der Oberfläche in Kauf genommen werden müssen.

Unter der Netzbogenlänge $\alpha$ versteht man hier und im Folgenden den Quotienten aus dem zahlmittleren Molekulargewicht $M_n$ geteilt durch die mittlere Funktionalität des Oligomers, d. h. durch mittlere Anzahl der ethylenisch ungesättigten Doppelbindungen pro Oligomermolekül. Dementsprechend wird die Netzbogenlänge $\alpha$ in g/mol angegeben. Die mittlere Anzahl der ethylenisch ungesättigten Doppelbindungen der Oligomere kann beispielsweise mittels $^1$H-NMR-Spektrometrie bestimmt werden. Das zahlenmittlere Molekulargewicht der Oligomere kann in an sich bekannter Weise durch Gelpermeationschromatographie nach DIN 55672-1:2016-03 unter Verwendung von Polystyrol als Standard und Tetrahydrofuran als mobile Phase bestimmt werden.

Die Onset-Temperatur des Glasübergangs ist diejenige Temperatur, die in einem mittels Dynamischer Differenzthermoanalyse nach DIN EN ISO 11357-2:2014 bei einer Aufheizrate von 10 k/min gemessenen Thermogramm die untere Temperatur des Glasübergangs anzeigt und die durch Extrapolation des Thermogramms nach Maßgabe der DIN EN ISO 11357-2:2014 ermittelt wird.

Sofern nichts anderes angegeben wird, bedeutet der Begriff "Hauptbestandteil" in Bezug auf die in der Lackformulierung F enthaltenen härtbaren Bestandteile, dass der so bezeichnete Bestandteil oder das Gemisch der so bezeichneten Bestandteile wenigstens 40 Gew.-%, insbesondere wenigstens 50 Gew.-% derjenigen Bestandteile der Lackformulierung F ausmacht, die ethylenisch ungesättigte Doppelbindungen aufweisen und damit härtbare Bestandteile sind.

Der Begriff "Bestandteile, welche die Beschichtung bilden" umfasst alle Bestandteile der Lackformulierung F, die beim Aushärten der Lackschicht in der Beschichtung verbleiben. Diese Bestandteile sind grundsätzlich alle Bestandteile der Lackformulierung F, die von Wasser und nicht polymerisierbaren, flüchtigen Lösungsmitteln verschieden sind.

Der Begriff "härtbare Bestandteile" umfasst alle Bestandteile der Lackformulierung F, die ethylenisch ungesättigte Doppelbindungen aufweisen und daher beim Aushärten der Lackschicht ein polymeres Netzwerk ausbilden.

In Bezug auf die Schritte ii. und iv. bedeutet der Ausdruck "UV-Strahlung, die im Wesentlichen im Wellenlängenbereich von X bis Y nm (z. B. 250 bis 420 nm) liegt", dass die überwiegende Strahlungsleistung, insbesondere wenigstens 80 % und speziell wenigstens 90 % der Strahlungsleistung der verwendeten Strahlungsquelle durch UV-Strahlung erbracht wird, in dem angegebenen Wellenlängenbereich X bis Y nm (z. B. 250 bis 420 nm) liegt.

Der Begriff "Doppelbindungsfunktionalität" bezeichnet die mittlere Anzahl (Zahlenmittel) an polymerisierbaren, ethylenischen Doppelbindungen pro Molekül.

Der Begriff "(Meth)acryl" umfasst sowohl Acryl- wie auch Methacryl-Gruppen. Der Begriff "(Meth)acrylat" umfasst somit die Begriffe Acrylat und Methacrylat.

Die im erfindungsgemäßen Verfahren eingesetzten Lackformulierungen F enthalten wenigstens 80 Gew.-%, insbesondere wenigstens 85 Gew.-%, z. B. 80 bis 99,9 Gew.- %, insbesondere 85 bis 99,5 Gew.-%, bezogen auf das Gesamtgewicht der in der Lackformulierung F enthaltenen, die Beschichtung bildenden Bestandteile, härtbare Bestandteile, d. h. Substanzen, welche ethylenisch ungesättigte Doppelbindungen aufweisen. Bei den Substanzen, welche ethylenisch ungesättigte Doppelbindungen aufweisen, kann es sich um Oligomere oder Polymere wie auch um Monomere handeln. Während Oligomere und Polymere typischerweise ein zahlenmittleres Molekulargewicht $M_n$ wenigstens 450 g/mol, insbesondere wenigstens 500 g/mol, z. B. im Bereich von 450 bis 10000 g/mol und speziell im Bereich von 500 bis 10000 g/mol aufweisen, liegt das zahlenmittlere Molekulargewicht $M_n$ der Monomere unterhalb 450 g/mol und liegt typischerweise im Bereich von 100 bis 400 Dalton.

Hierbei werden die härtbaren Bestandteile in der Regel so ausgewählt, dass die Lackformulierung F wenigstens 2,0 mol, insbesondere wenigstens 2,5 mol und speziell wenigstens 3,0 mol, z. B. 2,0 bis 8,0 mol, insbesondere 2,5 bis 7,5 mol und speziell 3,0 bis 7,0 mol ethylenisch ungesättigte Doppelbindungen pro kg der in der Lackformulierung F enthaltenen, die Beschichtung bildenden Bestandteile enthält.

Die ethylenisch ungesättigten Doppelbindungen der härtbaren Bestandteile der Lackformulierung F liegen üblicherweise in Form von Acrylgruppen, Methacrylgruppen, Allylgruppen, Fumarsäuregruppen, Maleinsäuregruppen und/oder Maleinsäureanhydridgruppen, insbesondere zu wenigstens 90 % oder 100 %, bezogen auf die Gesamtmenge der in der Lackformulierung F enthaltenen ethylenisch ungesättigten Doppelbindungen, in Form Acryl- oder Methacrylgruppen und speziell in Form von Acrylgruppen vor. Die Acryl- und Methacrylgruppen können in Form von (Meth)Acrylamid- oder (Meth)Acrylat-Gruppen vorliegen, wobei Letzteres bevorzugt ist. Insbesondere weisen die härtbaren Bestandteile der Lackformulierung F zu wenigstens 90 % oder 100 %, bezogen auf die Gesamtmenge der in der Lackformulierung F enthaltenen ethylenisch ungesättigten Doppelbindungen, Acrylatgruppen auf.

Erfindungsgemäß enthält die Lackformulierung F wenigstens ein Oligomer oder Polymer, das ethylenisch ungesättigte Doppelbindungen aufweist und im Mittel eine Doppelbindungsfunktionalität von wenigstens 1,5, insbesondere wenigstens 1,8 aufweist. Vorzugsweise weisen die Oligomere bzw. Polymere der Lackformulierung F eine Doppelbindungsfunktionalität im Bereich von 1,5 bis 10, insbesondere im Bereich von 1,8 bis 8,5 auf, d. h. die Anzahl ethylenisch ungesättigter Doppelbindungen pro Oligomer- bzw. Polymermolekül liegt im Mittel im Bereich von 1,5 bis 10 und insbesondere im Bereich von 1,8 bis 8,5. Geeignet sind auch Gemische verschiedener Oligomere mit unterschiedlicher Funktionalität, wobei die mittlere Doppelbindungsfunktionalität vorzugsweise im Bereich von 1,5 bis 10, insbesondere im Bereich von 1,8 bis 8,5 liegt.

Die Oligomere bzw. Polymere weisen typischerweise ein lineares oder verzweigtes Grundgerüst auf, welches die ethylenisch ungesättigten Doppelbindungen trägt, vorzugsweise in Form der vorgenannten Acrylgruppen und insbesondere in Form von Acrylatgruppen vorliegen, wobei die ethylenisch ungesättigten Doppelbindungen über einen Linker an das Grundgerüst gebunden sein können oder Bestandteil des Grundgerüsts sind. Geeignete Oligomere und Polymere sind vor allem Oligomere und Polymere aus der Gruppe der Polyether, Polyester, Melaminharze, Silikonharze, Polyurethane, Polycarbonate und Epoxidharze.

Insbesondere sind die Oligomere und Polymere ausgewählt unter Polyether(meth)acrylaten, d. h. Polyether mit Acrylgruppen und/oder Methacrylgruppen, Polycarbonat-(meth)acrylaten, d. h. Polycarbonate mit Acrylgruppen und/oder Methacrylgruppen, Polyester(meth)acrylaten, d. h. Polyester mit Acrylgruppen und/oder Methacrylgruppen, Epoxy(meth)acrylaten, d. h. Reaktionsprodukte von Polyepoxiden mit hydroxyl-, amino- oder carboxylfunktionalisierten (Meth)acrylverbindungen, Urethan(meth)acrylaten, d. h. Oligomere und Polymere, die ein (Poly)urethangerüst und Acrylgruppen und/oder Methacrylgruppen aufweisen, beispielsweise Umsetzungsprodukte von Polyisocyanaten mit hydroxyl- oder aminofunktionalisierten Acrylverbindungen. Geeignet sind auch ungesättigte Polyesterharze, d. h. Polyester, die mehrere, vorzugsweise im Polymergerüst vorliegende, ethylenisch ungesättigte Doppelbindungen aufweisen, z. B. Kondensationsprodukte von Itakonsäure, Maleinsäure oder Fumarsäure oder deren Anhydriden mit aliphatischen Di- oder Polyolen, und deren Gemischen.

Geeignete Polyether(meth)acrylate sind vor allem Polyetheracrylate, insbesondere solche, die im Mittel 1,8 bis 6 Acrylat-Gruppen aufweisen. Beispiele hierfür sind die Laromer®-Typen PO33F, PO43F, LR8863, PO9034, GPTA, PO8967, PO8982, PO9007, PO9062, PPTTA der BASF SE; AgiSyn®-Typen 701, 702, 703, 2836, 2837, 2844, 2858, 2867, 2869, 2897 der Fa. DSM Coating Resins B.V.; Ebecryl®-Typen 40, 160, OTA480 der Fa. Allnex S.a.r.l.; Etermer® EM-Typen 2380, 2381, 2382, 2383, 2384, 2385, 2386, 2387, 2411, 2421, 3380 der Fa. Eternal Chemical Co., Ltd.; Miramer®-Typen 320, 360, 3130, 3150, 3160, 3190, 4004 der Fa. Miwon Specialty Chemical Co., Ltd.; Sanmu® EO3-TMPTA der Jiangsu Sanmu Group Corporation; Sartomer® SR-Typen 415, 454, 492, 494, 499, 502, 593, 9008, 9012, 9019, 9020, 9020HP, 9035, Sartomer® CN-Typen 435, Sartomer® CD-Typen 501, 9021 der Fa. Sartomer, wobei es sich bei den vorgenannten Produkten teilweise um Abmischungen mit Monomeren handelt. Hierunter bevorzugt sind aliphatische Polyetheracrylate, insbesondere solche, die durch Veresterung $C_2$-$C_4$-alkoxylierter Polyole mit Acrylsäure erhältlich sind. Besonders bevorzugt sind aliphatische Polyetheracrylate, deren zahlenmittleres Molekulargewicht $M_n$ im Bereich von 500 bis 4000 g/mol liegt.

Geeignete Polyester(meth)acrylate sind vor allem Polyesteracrylate, insbesondere solche, die im Mittel 1,8 bis 6 Acrylat-Gruppen aufweisen. Beispiele hierfür sind die Laromer® PE-Typen 55F, 56F, 46T, 8800, 8907, 8981, 9004, 9024, 9032, 9045, 9074, 9079, 9084, 9105, 9121, 9123, 9125, 9126, 9127, 9128, 9129, 9142, 9155 der BASF SE; die Ebecryl®-Typen 140, 154, 170, 411, 411, 436, 437, 438, 446, 450, 452, 524, 525, 546, 570, 571, 575, 657, 770, 800, 810, 811, 812, 820, 830, 837, 846, 851, 852, 853, 854, 859, 870, 873, 884, 885, 892, 894, 898, 1657, 1870, 4266, 4744, 4764, 5781, 5849, 10801 der Fa. Allnex S.a.r.l.; AgiSyn®-Typen 705, 706, 710, 720, 730, 740 der Fa. DSM Coating Resins B.V.; die Etercure®-Typen DR-E 503, DR-E 514, DR-E 532, DR-E 572, DR-E 577, DR-E 601, DR-E 602, 6078, 6237, 6311, 6312, 6313, 6314, 6315, 6316, 6317, 6319, 6320, 6321, 6323, 6327, 6332, 6333, 6340, 6341, 6342, 6343, 6351, 6353, 6355, 6358, 6360, 6361, 6362 der Eternal Chemical Co. Ltd.; die Photomer®-Typen 4771, 4775, 4967, 5006, 5010, 5041, 5050, 5428, 5429, 5432, 5434, 5435, 5443, 5450 der Fa. IGM Resins B.V.; die Miramer®-Typen Miramer PE 220, Miramer P 261, Miramer P 261, Miramer PS , 60, Miramer PS 643, Miramer PS 1000, Miramer SC 1010, Miramer SC 1020, Miramer P 2229, Miramer WS 2601, Miramer PS 3010, Miramer PS 3214, Miramer PS 3220, Miramer PS 4040, Miramer PS 4500, Miramer S 5257, Miramer PS 6300, Miramer PS 6400 und die Photomer®-Typen Photocryl P 302, Photocryl DP 344 der Miwon Specialty Chemical Co., Ltd.; die Qualipoly® GU-Typen GU2168Z, GU2169Z, GU8400C, GU8400X, GU8436C, GU8436X, GU8500C, GU8540C, GU8703D, GU9315Z, GU9400Y, GU9600Y, GU9600Z, GU9700D, GU9700Y, GU9700Z, GU9900Y, GU9900Z, GU9900W der Fa. Qualipoly Chemical Corporation; die Genomer®-Typen 3485, 3611, 7227 der Fa. Rahn AG; die Sartomer® CN-Typen 203, 204, 210, 225, 292, 293, 294, 296, 298, 298, 704, 710, 736, 738, 750, 790, 1007, 2100, 2101, 2200, 2201, 2203, 2204, 2205, 2250, 2251, 2252, 2253, 2255, 2256, 2257, 2258, 2259, 2260, 2261, 2262, 2266, 2270, 2271, 2273, 2274, 2276, 2279, 2281, 2282, 2295, 2297, 2505, 2540, 2555, 2560, 2800, 2881, 2900, 2901, 2902 der Fa. Sartomer, wobei es sich bei den vorgenannten Produkten teilweise um Abmischungen mit Monomeren handelt. Hierunter bevorzugt sind aliphatische Polyesteracrylate. Besonders bevorzugt sind aliphatische Polyesteracrylate, deren zahlenmittleres Molekulargewicht $M_n$ im Bereich von 500 bis 4000 g/mol liegt.

Geeignete Urethan(meth)acrylate sind vor allem Urethanacrylate, insbesondere Urethangruppen-haltige Oligomere und Polymere, die im Mittel 1,8 bis 10, insbesondere 1,9 bis 8,5 Acrylat-Gruppen aufweisen und die vorzugsweise durch Umsetzung aromatischer oder aliphatischer Di- oder Oligoisocyanate mit Hydroxyalkylacrylaten erhältlich sind. Beispiele hierfür sind die Laromer®-Typen UA19T, UA9028, UA9030, UA8987, UA9029, UA9033, UA9047, UA9048, UA9050, UA9072, UA9065, UA9089, UA9073 und UA9136 der BASF SE; die Neorad® U-Typen 10, 20, 25, 42, 60, 61, 6282, 6288 der Fa. DSM Coating Resins B.V.; die AgiSyn®-Typen 230, 236, 250, 670 der Fa. DSM Coating Resins B.V.; die Ebecryl®-Typen 204, 205, 206, 210, 214, 215, 220, 221, 230, 244, 245, 246, 264, 265, 267, 270, 271, 280, 284, 285, 286, 294, 1258, 1290, 1290, 1291, 2002, 2003, 2221, 4101, 4150, 4201, 4220, 4250, 4265, 4396, 4491, 4501, 4510, 4513, 4587, 4654, 4666, 4680, 4683, 4740, 4765, 4820, 4858, 4859, 5021, 5129, 6202, 8100, 8110, 8210, 8213, 8215, 8232, 8254, 8296, 8301, 8307, 8310, 8311, 8402, 8405, 8413, 8415, 8465, 8602 der Fa. Allnex S.a.r.l; Etercure®-Typen 611, 615, 6072, 6081, 6101, 6112, 6113, 6114, 6115, 6120, 6121, 6122, 6123, 6127, 6130, 6131, 6134, 6141, 6142, 6143, 6144, 6145, 6145,6146, 6147, 6148, 6148, 6149,6150, 6151, 6152, 6153 ,6153, 6154, 6154, 6157, 6158, 6160, 6161, 6164, 6165, 6170, 6171, 6172, 6175, 6175, 6175, 6176, 6181, 6195, 6196, 6197, 6198, 8000 Etercure DR-U 6-1, Etercure DR-U 10 , Etercure DR-U 11 , Etercure DR-U 20 , Etercure DR-U 21 , Etercure DR-U 22 , Etercure DR-U 24 , Etercure DR-U 25 , Etercure DR-U 26 , Etercure DR-U 57 , Etercure DR-U 91 , Etercure DR-U 92 , Etercure DR-U 95 , Etercure DR-U 106 , Etercure DR-U 116 , Etercure DR-U 300 , Etercure DR-U 301 der Eternal Chemical Co. Ltd.; die Photomer®-Typen 6008, 6009, 6010, 6019, 6184, 6210, 6230, 6625, 6628, 6690, 6720, 6891, 6892, 6893 der Fa. IGM Resins B.V., die Miramer®-Typen 256, 307, 320, 340, 360, 375, 610, 620, 622, 662, 664, 2012, 2030, 2100, 2152, 2200, 2404, 2410, 2421, 2510, 2560, 2564, 2565, 2900, 3100, 3195, 3201, 3280, 3304, 3400, 3420, 3440, 3450, 3600, 3603, 3701, 3710, 3722, 4100, 4150, 5000, 5216, 6140, 9800 der Miwon Specialty Chemical Co., Ltd.; die Genomer®-Typen 1122, 4188, 4205, 4215, 4217, 4256, 4267, 4269, 4297, 4302, 4312, 4316, 4425, 4590, 4622 der Fa. Rahn AG; die Sartomer® CN-Typen 902, 910, 914, 916, 922, 925, 929, 936, 944, 945, 945, 945, 956, 959, 961, 961, 962, 963, 963, 963, 963, 963, 964, 965, 966, 967, 968, 970, 971, 972, 973, 975, 976, 977, 978, 980, 981, 982, 983, 984, 985, 989, 990, 991, 992, 994, 996, 997, 998, 999, 1963, 3000, 3001, 8000 ,8001, 8002, 8003, 9001,9002, 9004, 9007, 9010, 9014, 9026, 9101, 9102, 9130, 9143, 9165, 9167, 9170, 9196, 9200 ,9245, 9245, 9250, 9251, 9260, 9276, 9278, 9293, 9761, 9782, 9783, 9788, 9800, 9893 der Fa. Sartomer; die Qualicure® GU-Typen GU3001Z, GU3010Z, GU3030Z, GU3100W, GU3100Y, GU3100Z, GU3185A, GU3185B, GU3285A, GU3290M, GU3300W, GU3300Z, GU3370A, GU3400Y, GU3400Z, GU3501Q, GU4000Y, GU4075B, GU4100Y, GU4175X, GU4200Z, GU4280B, GU4300Y, GU4500Y, GU6100L, GU6200Y, GU6200Z, GU6300Y, GU6370F, GU7200Z, GU7400Z, GU7500Z, GU3680A, GU3700Y, GU3701W, GU3775A, GU3980A, GU4660A, GU4900Y, GU6600Y, GU7900Z die Qualicure® GS-Typen GS4920C, GS5120C der Fa. Qualipoly Chemical Corporation, wobei es sich bei den vorgenannten Produkten teilweise um Abmischungen mit Monomeren handelt. Hierunter bevorzugt sind aliphatische Urethanacrylate. Besonders bevorzugt sind aliphatische Urethanacrylate, deren zahlenmittleres Molekulargewicht $M_n$ im Bereich von 500 bis 4000 g/mol liegt.

Geeignete Epoxy(meth)acrylate sind vor allem aromatische Epoxy(meth)acrylate, speziell aromatische Epoxyacrylate. Beispiele für Epoxyacrylate sind insbesondere die Umsetzungsprodukte von aliphatischen Polyglycidylethern mit Acrylsäure oder mit hydroxy-funktionalisierten Acrylverbindungen sowie die Umsetzungsprodukte von aromatischen Polyglycidylethern mit Acrylsäure oder mit hydroxy-funktionalisierten Acrylverbindungen. Der Begriff Polyglycidylether umfasst Diglycidylether von aliphatischen oder aromatischen Diolen sowie Oligomere, die durch Reaktion von Diglycidylethern mit zweiwertigen oder höherwertigen Alkoholen erhalten werden und die neben Epoxygruppen auch veresterbare Hydroxylgruppen aufweisen. Geeignete hydroxy-funktionalisierte Acrylverbindungen sind insbesondere Hydroxyalkylacrylate, z. B. Hydroxyethylacrylat, Hydroxypropylacrylat oder Hydroxybutylacrylat. Die zur Herstellung der Epoxyacrylate eingesetzten Polyglycidylether weisen typischerweise im Mittel 2 bis 4 Glycidylgruppen pro Molekül auf und können auch 1 bis 4 veresterbare Hydroxylgruppen aufweisen. Bevorzugte Epoxyacrylate sind aromatische Epoxyacrylate. Hierunter bevorzugt sind die Umsetzungsprodukte von Polyglycidylethern auf Basis von Novolacken und die Umsetzungsprodukte von Polyglycidylethern auf Basis von Bisphenolen, z. B. auf Basis von Bisphenol A oder Bisphenol F. Hierunter bevorzugt sind die Umsetzungsprodukte von aromatischen Polyglycidylethern, insbesondere von solchen auf Basis von Novolacken oder auf Basis von Bisphenolen wie Bisphenol A oder Bisphenol F mit Acrylsäure und/oder Hydroxyalkylacrylaten. Besonders bevorzugt sind aromatische Epoxyacrylate, deren zahlenmittleres Molekulargewicht $M_n$ im Bereich von 500 bis 4000 g/mol liegt. Besonders bevorzugt sind aromatische Epoxyacrylate, die im Mittel 1,9 bis 5, speziell 2 bis 4 Acrylatgruppen aufweisen. Beispiele hierfür sind die Laromer®-Typen LR8765 (aliphatisch), LR8986, LR9019, LR9023, EA9081, EA9082, EA9097, EP9124, EA9138, EA9143 und EA9145, EA9148 der BASF SE; die AgiSyn®-Typen 1010, 1030, 2020, 3010, 3020, 3051, 9720, 9721, 9750, 9760, 9771, 9790, 9792 der Fa. DSM Coating Resins B.V.; die Ebecryl®-Typen 113, 600, 604, 605, 608, 609, 640, 641, 648, 860, 1606, 1608, 3105, 3203, 3300, 3416, 3420, 3608, 3639, 3700, 3700, 3701, 3702, 3703, 3708, 3730, 3740, 5848, 6040 der Fa. Allnex S.a.r.l.; die Etercure®-Typen 621, 621, 622, 622, 623, 623, 624, 624, 625, 923, 6209, 6210, 6211, 6213, 6215, 6219, 6231, 6233, 6233, 6234, 6235, 6241, 6261, 620 der Eternal Chemical Co. Ltd.; die Photomer®-Typen 3005, 3015, 3016, 3072, 3316, 3317, 3620, 3660 der IGM; die Miramer®- und Photocryl®-Typen Miramer PE 110 H, Photocryl E 202 , Photocryl E 203 /30PE, Photocryl E 207 /25TP, Photocryl E 207 /30PE, Photocryl E 07 /25HD, Miramer PE 210, Miramer PE 210 HA, Miramer PE 230, Miramer PE 250, Miramer PE 250 LS, Photocryl DP 296, Miramer PE 310, Photocryl DP 460, Miramer PE 2100, Miramer PE 2120 A, Miramer PE 2120 C, Miramer PE 2120 B, Miramer PE 130, Miramer ME 2500, Miramer SC 6345, Miramer SC 6400 der Miwon Specialty Chemical Co., Ltd.; die Genomer®-Typen 2235, 2253, 2255, 2259, 2263, 2280 der Fa. Rahn AG; die Sartomer® CN- und Kyrarad®-Typen Sartomer CN 104 Y50, Sartomer CN 108, Sartomer CN 109, Sartomer CNUVE 110/95, Sartomer CN 111, Sartomer CN 112 B70, Sartomer CN 12 C60, Sartomer CN 113 D70, Sartomer CNUVE 114 /95, Sartomer CN 115, Sartomer CN 116, Sartomer CN 116 D50, Sartomer CN 117, Sartomer CN 118, Sartomer CN 119, Sartomer CN 120, Sartomer CN 120 A75, Sartomer CN 120 A80, Sartomer CN 120 B60, Sartomer CN 120 B80, Sartomer CN 120 C60, Sartomer CN 120 C80, Sartomer CN 120 D80, Sartomer CN 120 E50, Sartomer CN 120 J90, Sartomer CN 120 M50, Sartomer CN 120 S80, Sartomer CN 121 , Sartomer CN 122 A80, Sartomer CN 124,Sartomer CN 129, Sartomer CNUVE 130, Sartomer CN 131 B, Sartomer CN 132, Sartomer CN 133, Sartomer CN 136, Sartomer CN 148, Sartomer CNUVE 150/80, Sartomer CN 151, Sartomer CNUVE 151, Sartomer CN 152, Sartomer CN 56, Sartomer CN 159, Sartomer CN 173, Sartomer CN 186, Kayarad R 190, Kayarad R 205, Kayarad TCR 1094, Kayarad TCR 1096, Sartomer CN 1300, Sartomer CN 2003 EU, Kayarad EAM 2160, Kayarad EAM 2300 der Fa. Sartomer, die Qualicure® GU-Typen GU1160C, GU1200W, GU1280A, GU1380A, GU1400Z, GU1475A, GU1480A,GU1600Y, GU1650X, GU1700W, GU1700P, GU1700T, GU1700Y, GU1700Z, GU1800W, GU1900W, GU1900Z der Fa. Qualipoly Chemical Corporation, wobei es sich bei den vorgenannten Produkten teilweise um Abmischungen mit Monomeren handelt.

Geeignete aliphatische Polycarbonat(meth)acrylate sind vor allem Polycarbonatacrylate, insbesondere solche mit einem zahlenmittleren Molekulargewicht $M_n$ im Bereich von 600 bis 3000 g/mol und einer mittleren Doppelbindungsfunktionalität im Bereich von 2 bis 15 Doppelbindungen pro Molekül, insbesondere 2 bis 10 Doppelbindungen pro Molekül. Derartige aliphatische Polycarbonat(meth)acrylate sind bekannt, z. B. aus der WO 2016/186728, oder können durch Umsetzung von OH-terminierten, aliphatischen Polycarbonaten mit Acrylsäure oder Ester-bildenden Acrylsäureverbindungen, z. B. (Meth)acrylchlorid oder $C_1$-$C_4$-Alkyl(meth)acrylat, wie Methylacrylat oder Ethylacrylat, unter Veresterungs- bzw. Umesterungsbedingungen hergestellt werden.

In einer Gruppe von Ausführungsformen der Erfindung enthält die Lackformulierung F wenigstens ein Oligomer oder Polymer, das unter Urethan(meth)acrylaten, Polyester-(meth)acrylaten, Polycarbonat(meth)acrylaten, Polyether(meth)acrylaten und deren Mischungen ausgewählt ist sowie gegebenenfalls ein oder mehrere Monomere. Hierunter bevorzugt sind solche Lackformulierungen F, in denen die unter Urethan(meth)acrylaten, Polyester(meth)acrylaten, Polycarbonat(meth)acrylaten, Polyether(meth)acrylaten und deren Mischungen ausgewählten Oligomere bzw. Polymere den Hauptbestandteil, d. h. wenigstens 50 Gew.-% und insbesondere wenigstens 60 Gew.-% der die Beschichtung bildenden Bestandteile ausmachen. In dieser Gruppe von Ausführungsformen sind solche Lackformulierungen F bevorzugt, in denen die Oligomere bzw. Polymere unter aliphatischen Urethanacrylaten, aliphatischen Polyesteracrylaten, aliphatischen Polyetheracrylaten, aliphatischen Polycarbonatacrylaten und deren Mischungen ausgewählt sind.

In einer weiteren Gruppe von Ausführungsformen der Erfindung enthält die Lackformulierung F wenigstens ein Oligomer oder Polymer, das unter Epoxyacrylaten, insbesondere unter aromatischen Epoxyacrylaten, ausgewählt ist. Das Epoxyacrylat kann alleiniges Oligomer oder Polymer sein oder ein Gemisch mit einem oder mehreren davon verschiedenen Oligomeren oder Polymeren sein. Weitere Oligomere und Polymere sind insbesondere ausgewählt unter Urethanacrylaten, Polyesteracrylaten, Polyetheracrylaten, Polycarbonatacrylaten und deren Mischungen, speziell unter aliphatischen Urethanacrylaten, aliphatischen Polyesteracrylaten, aliphatischen Polyetheracrylaten, aliphatischen Polycarbonatacrylaten und deren Mischungen. In dieser Gruppe von Ausführungsformen enthält die Lackformulierung F wenigstens ein aromatisches Epoxyacrylat vorzugsweise in einer Menge von wenigstens 20 Gew.-%, insbesondere wenigstens 30 Gew.-%, besonders bevorzugt wenigstens 40 Gew.-% oder wenigstens 50 Gew.-%, bezogen auf die Gesamtmasse der in der Lackformulierung F enthaltenen, die Beschichtung bildenden Bestandteile.

Neben den ethylenisch ungesättige Doppelbindungen aufweisenden Oligomeren oder Polymeren können die vernetzbaren Bestandteile der Lackformulierung F ein oder mehrere Monomere enthalten, die auch als Reaktivverdünner bezeichnet werden. Die Monomere weisen typischerweise Molekulargewichte unterhalb 450 g/mol, z. B. im Bereich von 100 bis 400 g/mol, auf. Geeignete Monomere weisen in der Regel 1 bis 6, insbesondere 2 bis 4 ethylenisch ungesättigte Doppelbindungen pro Molekül auf. Die ethylenisch ungesättigten Doppelbindungen liegen dabei vorzugsweise in Form der vorgenannten Acrylgruppen, Methacrylgruppen, Allylgruppen, Fumarsäuregruppen, Maleinsäuregruppen und/oder Maleinsäureanhydridgruppen, Itakonsäuregruppen, insbesondere in Form von Acryl- oder Methacrylgruppen und speziell als Acrylatgruppen vor.

Bevorzugte Monomere sind ausgewählt unter Estern der Acrylsäure mit 1- bis 6-wertigen, insbesondere 1- bis 4-wertigen aliphatischen oder cycloaliphatischen Alkoholen, die gegebenenfalls ethoxyliert oder propoxyliert sein können und die vorzugsweise 2 bis 20 C-Atome aufweisen, wie beispielsweise

- Monoester der Acrylsäure mit mono- oder difunktionellen Alkoholen, z. B. mit $C_1$-$C_{20}$-Alkanolen, Benzylalkohol, Furfurylalkohol, Tetrahydrofurfurylalkohol, (5-Ethyl-1,3-dioxan-5-yl)methanol, Phenoxyethanol, cyclisches Trimethylolpropanformal, 1,4-Butandiol oder mit 4-tert.-Butylcyclohexanol;
- Diester der Acrylsäure mit di- oder trifunktionellen Alkoholen, z. B. mit Ethylenglykol, 1,3-Propandiol, 1,2-Propandiol, 1,4-Butandiol, Neopentylglykol, ethoxyliertem Neopentylglykol, 1,6-Hexandiol, Diethylenglykol, Triethylenglykol, Dipropylenglykol oder mit Tripropylenglykol;
- Triester der Acrylsäure mit tri- oder tetrafunktionellen Alkoholen, z. B. mit Glycerin, propoxyliertem Glycerin, Trimethylolpropan, ethoxyliertem Trimethylolpropan, propoxyliertem Trimethylolpropan, gemischt ethoxyliert und propoxyliertem Trimethylolpropan oder mit Pentaerythrit (ethoxyliert oder propoxyliert) oder Ditrimethylolpropan;
- die Tetraester der Acrylsäure mit tetra- oder hexafunktionellen Alkoholen, z. B. mit Pentaerythrit, Ditrimethylolpropane oder mit ethoxyliertem Pentaerythrit;
- die Pentaester der Acrylsäure mit hexafunktionellen Alkoholen, z. B. mit Di-Pentaerythrit, Isosorbid oder mit ethoxyliertem und/oder propoxyliertem Di-Pentaerythrit oder Isosorbid; sowie
- die Hexaester der Acrylsäure mit hexafunktionellen Alkoholen, z. B. mit Di-Pentaerythrit, Isosorbid oder mit ethoxyliertem und/oder propoxyliertem Di-Pentaerythrit oder Isosorbid.

Beispiele für geeignete Monomere sind vor allem Trimethylolpropandiacrylat, Trimethylolpropantriacrylat, Ethylenglykoldiacrylat, Butandioldiacrylat, Hexandioldiacrylat, Dipropylenglykoldiacrylat, Tripropylenglykoldiacrylat, Phenoxyethylacrylat, Furfurylacrylat, Tetrahydrofurfurylacrylat, 4-t-Butylcyclohexylacrylat, 4-Hydroxybutylacrylat und Trimethylolformalmonoacrylat (Acrylsäure-(5-ethyl-1,3-dioxan-5-yl)methylester), der Triester des mit 2 bis 4 Mol Ethylenoxyid ethoxyliertem Trimethylolpropans mit Acrylsäure, der Diester des mit 1-3 Mol Ethylenoxid ethoxyliertem Neopentylglykols mit Acrylsäure und der Diester des mit 1 bis 3 Mol Propylenoxid propoxiliertem Neopentylglykols mit Acrylsäure.

In erfindungsgemäßen Lackformulierungen F umfassen die in der Lackformulierung F enthaltenen, härtbaren Bestandteile in der Regel wenigstens 40 Gew.-%, insbesondere wenigstens 45 Gew.-%, speziell wenigstens 50 Gew.-%, bezogen auf die Gesamtmenge an härtbaren Bestandteilen, ein oder mehrere Oligomere und/oder Polymere, die ethylenisch ungesättigte Doppelbindungen aufweisen und im Mittel eine Doppelbindungsfunktionalität von wenigstens 1,5, insbesondere wenigstens 1,8 aufweisen, z. B. 1, 2, 3 oder 4 Oligomere oder Polymere, insbesondere 1, 2, 3 oder 4 der als bevorzugt genannten Oligomere oder Polymere. Der Anteil der Monomere liegt dann dementsprechend bei maximal 60 Gew.-%, insbesondere maximal 55 Gew.-%, speziell maximal 50 Gew.-%, bezogen auf die Gesamtmenge an härtbaren Bestandteilen der Lackformulierung F.

In Lackformulierungen F, die ein oder mehrere Monomere enthalten, bildet das Oligomer bzw. das Polymer vorzugsweise den Hauptbestandteil der härtbaren Bestandteile der Zusammensetzung, d. h. die Oligomere machen wenigstens 40 Gew.-%, insbesondere wenigstens 50 Gew.-%, speziell wenigstens 55 Gew.-%, bezogen auf die Gesamtmenge an Oligomer bzw. Polymere und Monomer aus, z. B. 40 bis 99 Gew.-%, insbesondere 50 bis 98 Gew.-% oder 55 bis 98 Gew.-%, bezogen auf die Gesamtmenge an Oligomer bzw. Polymere und Monomer. Das Gewichtsverhältnis der Gesamtmenge an Oligomere bzw. Polymere zur Gesamtmenge an Monomer liegt dann insbesondere im Bereich von 1 : 1 bis 100 : 1 und speziell im Bereich von 1,2 : 1 bis 50 : 1.

In anderen, ebenfalls erfindungsgemäßen Lackformulierungen F umfassen die in der Lackformulierung F enthaltenen, härtbaren Bestandteile ausschließlich oder nahezu ausschließlich, d. h. wenigstens 90 Gew.-%, insbesondere wenigstens 95 Gew.-%, speziell wenigstens 99 Gew.-%, bezogen auf die Gesamtmenge an härtbaren Bestandteilen, ein oder mehrere Oligomere, z. B. 1, 2, 3 oder 4 Oligomere oder Polymere, insbesondere 1, 2, 3 oder 4 der als bevorzugt genannten Oligomere oder Polymere. Der Anteil der Monomere liegt dann dementsprechend bei maximal 10 Gew.-%, insbesondere maximal 5 Gew.-%, speziell maximal 1 Gew.-% oder bei 0 Gew.-%, bezogen auf die Gesamtmenge an härtbaren Bestandteilen der Lackformulierung F.

Die Lackformulierungen F weisen typischerweise bei 23 °C eine dynamische Viskosität im Bereich von 5 mPa∗s bis 500 Pa∗s auf, insbesondere im Bereich von 20 mPa∗s bis 100 Pa∗s und speziell im Bereich von 50 mPa∗s bis 10 Pa∗s auf, bestimmt nach DIN 53019:2008-05 mittels eines Kegel-Platte-Viskosimeters bei einem Schergefälle von 200 bis 10000 $s^{-1}$ (10000 $s^{-1}$ bei 0 - 1 Pa∗s, 2500 $s^{-1}$ bei 1 - 4 Pa∗s, 800 $s^{-1}$ bei 4 - 12,5 Pa∗s und 200 $s^{-1}$ bei > 12,5 Pa∗s).

Neben den härtbaren Bestandteilen der Lackformulierung F enthalten die Lackformulierungen F wenigstens einen Photoinitiator. Unter Photoinitiatoren versteht man Substanzen, die bei Bestrahlung mit UV-Strahlung, d. h. Licht der Wellenlänge unterhalb 420 nm, insbesondere unterhalb 410 nm unter Bildung von Radikalen zerfallen und so eine Polymerisation der ethylenisch ungesättigten Doppelbindungen auslösen. Typischerweise weisen derartige Photoinitiatoren wenigstens eine Absorptionsbande auf, die im Bereich von 220 bis 420 nm, insbesondere im Bereich von 230 bis 410 nm ein Maximum aufweist und die mit der Initiierung des Zerfallsprozesses gekoppelt ist. Insbesondere weisen derartige Photoinitiatoren wenigstens eine Absorptionsbande mit einem Maximum $\lambda_{max}$ im Bereich von 220 bis 420 nm, insbesondere einem Maximum im Bereich von 230 bis 410 nm auf.

Beispiele für geeignete Photoinitiatoren sind

- alpha-Hydroxyalkylphenone und alpha-Dialkoxyacetophenone wie 1-Hydroxycyclohexylphenylketon, 2-Hydroxy-2-methyl-1-phenyl-1-propanon, 2-Hydroxy-1-{4-[4-(2-hydroxy-2-methylpropionyl)benzyl]phenyl}-2-methylpropan-1-on, 2-Hydroxy-1-[4-(2-hydroxyethoxy)phenyl]-2-methyl-1-propanon oder 2,2-Dimethoxy-1-phenylethanon;
- Phenylglyoxalsäureester wie Phenylglyoxalsäuremethylester;
- Benzophenone wie Benzophenon, 2-Hydroxybenzophenon, 3-Hydroxybenzophenon, 4-Hydroxybenzophenon, 2-Methylbenzophenon, 3_Methylbenzophenon, 4-Methylbenzophenon, 2,4-Dimethylbenzophenon, 3,4-Dimethylbenzophenon, 2,5-Dimethylbenzophenon, 4-Benzoylbiphenyl, oder 4-M ethoxybenzophenon;
- Benzilderivate wie Benzil, 4,4'-Dimethylbenzil und Benzildimethylketal;
- Benzoine wie Benzoin, Benzoinethylether, Benzoinisopropylether und Benzoinmethylether;
- Acylphosphinoxide wie 2,4,6-Trimethylbenzoyl-diphenylphosphinoxid, Ethoxy(phenyl)phosphoryl-(2,4,6-trimethylphenyl)methanon sowie Bis(2,4,6-trimethylbenzoyl)phenylphosphinoxid;
- Titanocene wie das unter der Bezeichnung Irgacure® 784 von der BASF SE vertriebene Produkt;
- Oximester wie die unter der Bezeichnung Irgacure® OXE01 und OXE02 von der BASF SE vertriebene Produkt;
- alpha-Aminoalkylphenone wie 2-Methyl-1-[4(methylthio)phenyl-2-morpholino-propan-1-on, 2-(4-Methylbenzyl)-2-dimethylamino-1-(4-morpholinophenyl)-1-butanon oder 2-Benzyl-2-dimethylamino-1-(4-morpholinophenyl)-1-butanon.

Bevorzugte Photoinitiatoren sind vor allem ausgewählt aus den Gruppen der alpha-Hydroxyalkylphenone, alpha-Dialkoxyacetophenone, Phenylglyoxalsäureester, Benzophenone, Benzoine und Acylphosphinoxide.

Vorzugsweise enthalten die Lackformulierungen F wenigstens einen Photoinitiator I, der eine Absorptionsbande mit einem Maximum $\lambda_{max}$ im Bereich von 340 bis 420 nm und speziell im Bereich von 350 bis 410 nm aufweist. Diese Photoinitiatoren I können in den Lackformulierungen F alleinige Photoinitiatoren sein. In bevorzugen Ausführungsformen der Erfindung enthalten die Lackformulierungen F neben dem Photoinitiator I vorzugsweise wenigstens einen weiteren Photoinitiator II, der eine Absorptionsbande mit einem Maximum $\lambda_{max}$ im Bereich von 220 bis 340 nm und speziell im Bereich von 230 bis 320 nm aufweist. Vorzugsweise liegt dann das Gewichtsverhältnis von Photoinitiator I zu Photoinitiator II im Bereich von 5 : 1 bis 1 : 20.

Bevorzugte Photoinitiatoren I, die eine Absorptionsbande mit einem Maximum $\lambda_{max}$ im Bereich 340 bis 420 nm und speziell im Bereich von 350 bis 410 nm aufweisen, sind die vorgenannten Acylphosphinoxide.

Bevorzugte Photoinitiatoren II, die eine Absorptionsbande mit einem Maximum $\lambda_{max}$ im Bereich von 220 bis 340 und speziell im Bereich von 230 bis 320 nm aufweisen, sind die vorgenannten alpha-Hydroxyalkylphenone, alpha-Dialkoxyacetophenone, Phenylglyoxalsäureester, Benzophenone und Benzoine.

Die Gesamtmenge an Photoinitiatoren liegt typischerweise im Bereich von 0,1 bis 10 Gew.-%, insbesondere 0,2 bis 5 Gew.-%, bezogen auf das Gesamtgewicht der härtbaren Bestandteile der Lackformulierung F.

Weiterhin können die Lackformulierungen F ein oder mehrere Mattierungsmittel enthalten, die einen zusätzlichen Mattierungseffekt und/oder eine Homogenisierung der Oberflächenstruktur bewirken. Hierzu zählen beispielsweise Siliziumdioxide, wie pyrogene Kieselsäure und synthetische, amorphe Kieselsäure, z. B. Fällungskieselsäure, sowie Zinkseifen, z. B. Zinkstearat. Die Gesamtmenge an Mattierungsmittel wird in der Regel 10 Gew.-%, bezogen auf das Gesamtgewicht der härtbaren Bestandteile der Lackformulierungen F nicht überschreiten und liegt, sofern enthalten, typischerweise im Bereich von 0,1 bis 10 Gew.-% und insbesondere im Bereich von 0,5 bis 5 Gew.-%, bezogen auf das Gesamtgewicht der härtbaren Bestandteile in der Lackformulierung F.

Weiterhin können die Lackformulierungen F ein oder mehrere nicht härtbare Harze enthalten, die mit den Bestandteilen der Lackformulierung kompatibel sind, d. h. sich in den Bestandteilen der Lackformulierung lösen. Diese Harze bewirken eine Verringerung des Volumenschrumpfs und erlauben damit z. B. eine Nivellierung der Glanzeigenschaften. Diese Harze werden auch als Inertharze bezeichnet. Zu den nicht härtbaren Harzen zählen vor allem Aldehyd-Kondensationsharze, z. B. Harnstoff-Formaldehyd-Kondensationsharze und Polyamidharze. Die Gesamtmenge an nicht härtbaren Harzen wird in der Regel 10 Gew.-%, bezogen auf das Gesamtgewicht der härtbaren Bestandteile der Lackformulierungen F nicht überschreiten und liegt, sofern enthalten, typischerweise im Bereich von 0,1 bis 10 Gew.-% und insbesondere im Bereich von 0,5 bis 5 Gew.-%, bezogen auf das Gesamtgewicht der härtbaren Bestandteile in der Lackformulierung F.

Weiterhin können die Lackformulierungen F ein oder mehrere Wachse, insbesondere mikronisierte Wachse enthalten, die eine Verbesserung der Resistenzen, insbesondere der Kratzbeständigkeit und/oder der Gleitreibung bewirken. Derartige Wachse weisen typischerweise Partikelgrößen im Bereich von 0.1 bis 10 $\mu$m auf (d50-Werte, bestimmt durch Lichtstreuung). Die Gesamtmenge an Wachsen wird in der Regel 5 Gew.-%, bezogen auf das Gesamtgewicht der härtbaren Bestandteile der Lackformulierungen F nicht überschreiten und liegt, sofern enthalten, typischerweise im Bereich von 0,05 bis 5 Gew.-% und insbesondere im Bereich von 0,1 bis 2 Gew.-%, bezogen auf das Gesamtgewicht der härtbaren Bestandteile in der Lackformulierung F.

Weiterhin können die Lackformulierungen F ein oder mehrere anorganische Füllstoffe enthalten. Hierzu zählen insbesondere mikronisierte Schichtsilikate wie mikronisiertes Kaolin und mikronisierte Magnesiumsilikate. Derartige Füllstoffe weisen typischerweise Partikelgrößen im Bereich von 0.1 bis 10 $\mu$m auf (d50-Werte, bestimmt durch Lichtstreuung). Die Gesamtmenge an anorganischen Füllstoffen wird in der Regel 10 Gew.- %, bezogen auf das Gesamtgewicht der härtbaren Bestandteile der Lackformulierungen F nicht überschreiten und liegt, sofern enthalten, typischerweise im Bereich von 0,1 bis 5 Gew.-% und insbesondere im Bereich von 0,2 bis 3 Gew.-%, bezogen auf das Gesamtgewicht der härtbaren Bestandteile in der Lackformulierung F.

Daneben können die Lackformulierungen F ein oder mehrere weitere Additive enthalten. Geeignete Additive sind beispielsweise Lichtschutzmittel, wie UV-Absorber und reversible Radikalfänger (HALS), Antioxidantien, Entlüftungsmittel, Netzmittel, Emulgatoren, Slipadditive, Polymerisationsinhibitoren, Haftvermittler, Verlaufsmittel, filmbildende Hilfsmittel, Rheologiehilfsmittel, wie Verdicker und strukturviskose sogenannte "Sag Control Agents" (SCA), Flammschutzmittel, Korrosionsinhibitoren, Sikkative und Biozide. Diese und weitere geeignete Bestandteile werden in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, beschrieben.

Die Lackformulierungen F können auch pigmentiert sein. Vorzugsweise enthalten sie dann mindestens ein Pigment der Gruppe der organischen und anorganischen Pigmente, z. B. aus der Gruppe der transparenten, der deckenden, der farbgebenden und/oder effektgebenden sowie der elektrisch leitfähigen Pigmente. Vorzugsweise enthalten die Lackformulierungen F keine Pigmente.

Die nicht-wässrigen Lackformulierungen F können auch ein oder mehrere organische Lösemittel enthalten. Geeignete organische Lösemittel sind gegenüber den vorhandenen funktionellen Gruppen des Beschichtungsmittels vom Zeitpunkt der Zugabe bis zum Ende des Verfahrens inert und weisen keine ethylenisch ungesättigten Doppelbindungen auf. Geeignet sind z. B. in der Lacktechnik verwendete Lösemittel wie Kohlenwasserstoffe, Alkohole, Ketone und Ester, z. B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid. Derartige Lösungsmittel machen vorzugsweise nicht mehr als 10 Gew.-%, insbesondere nicht mehr als 5 Gew.-% aus. Vorzugsweise enthalten die Lackformulierungen keine derartigen organischen Lösungsmittel.

Die Lackformulierungen F können als wässrige OW-Emulsionen ausgestaltet sein, welche die härtbaren Bestandteile der Lackformulierungen F und gegebenenfalls weitere Bestandteile in emulgierter Form enthalten. Der Anteil an härtbaren Bestandteilen in der Emulsion liegt typischerweise im Bereich von 10 bis 50 Gew.-%, bezogen auf das Gesamtgewicht der Lackformulierung F.

Bevorzugt sind die Lackformulierungen F als nicht-wässrige Lackformulierungen ausgestaltet, die zu wenigstens 80 Gew.-%, insbesondere wenigstens 90 Gew.-%, bezogen auf das Gesamtgewicht der Lackformulierung F, aus einem oder mehreren härtbaren Bestandteilen besteht, die ethylenisch ungesättigte Doppelbindungen aufweisen. Vorzugsweise handelt es sich hierbei um sogenannte 100%-Systeme, d. h. alle oder nahezu alle Bestandteile der Lackformulierung F sind von Wasser und flüchtigen Lösungsmitteln und sonstigen flüchtigen Bestandteilen verschieden und verbleiben somit beim Aushärten der Lackschicht in der Beschichtung.

Für die Herstellung matter Oberflächen mit einer weichen Haptik hat es sich als vorteilhaft erwiesen, wenn die Lackformulierungen F wenigstens eines der Merkmale (A), (B) und (C) aufweisen. Dementsprechend betrifft eine erste Gruppe 1 von Ausführungsformen der Erfindung ein Verfahren, bei dem Lackformulierungen F zum Einsatz kommen, die wenigstens eines der Merkmale (A), (B) und (C), insbesondere die Merkmale (A) und (B) oder (A) und (C) und speziell alle Merkmale (A), (B) und (C) aufweisen. Die Lackformulierungen F der Gruppe 1 können auch das Merkmal (D) aufweisen. In einer Untergruppe 1a von Ausführungsformen der Erfindung weisen die Lackformulierungen F der Gruppe 1 das Merkmal (C) nicht auf. In einer Untergruppe 1b von Ausführungsformen der Erfindung weisen die Lackformulierungen F der Gruppe 1 das Merkmal (D) auf.

Sofern die Lackformulierungen F das Merkmal (A) aufweisen, werden die härtbaren Bestandteile so ausgewählt, dass die Anzahl ethylenisch ungesättigter Doppelbindungen, bezogen auf die in der Lackformulierung F enthaltenen, die Beschichtung bildenden Bestandteile, im Bereich von 3,0 bis 8,0 mol/kg, insbesondere im Bereich von 3,0 bis 6,5 mol/kg liegen. Die Anzahl ethylenisch ungesättigter Doppelbindungen kann in an sich bekannter Weise über die relativen Mengenanteile der Oligomere, Polymere und Monomere sowie über den für sie leicht zu ermittelnden Doppelbindungsgehalt überprüft werden. Die Anzahl der Doppelbindungen in der Formulierung bzw. in den die Beschichtung bildenden Bestandteilen sowie der Doppelbindungsgehalt in den hierfür verwendeten Oligomeren, Polymeren und Monomeren kann in an sich bekannter Weise bestimmt werden, beispielsweise durch $^1$H-NMR sowie titrimetrisch über die Bromzahl oder die Iodzahl.

Sofern die Lackformulierungen F das Merkmal (B) aufweisen, enthalten die Lackformulierungen wenigstens ein Oligomer und/oder Polymer in einer Menge von wenigstens 30 Gew.-%, insbesondere wenigstens 40 Gew.-%, bezogen auf die Gesamtmenge der härtbaren Bestandteile der jeweiligen Lackformulierung F. Bei diesem Oligomer oder Polymer weist der Quotient $\alpha/T_o$ einen Wert von wenigstens 1,2, vorzugsweise wenigstens 1,3, insbesondere wenigstens 1,5 und speziell wenigstens 1,7 auf. Der dimensionslos angegebene Quotient $\alpha/T_o$ hat die Einheit $g \cdot K^{-1} \cdot mol^{-1}$. In der Regel wird der Quotient $\alpha/T_o$ einen Wert von 15,0 und insbesondere 12,0 und speziell 10,0 nicht überschreiten. Sofern die Lackformulierungen F ein Gemisch mehrerer Oligomere bzw. Polymere mit unterschiedlichen Quotienten $\alpha/T_o$ enthalten, reicht es grundsätzlich aus, wenn eines der Oligomere bzw. Polymere einen Quotient $\alpha/T_o$ mit den angegebenen Werten aufweist, um das Merkmal (B) zu erfüllen, wenn dieses Oligomer bzw. Polymer der Hauptbestandteil, bezogen auf die Gesamtmenge der härtbaren Bestandteile der jeweiligen Lackformulierung F, ist. Sofern die Lackformulierungen ein Gemisch mehrerer Oligomere bzw. Polymere mit unterschiedlichen Quotienten $\alpha/T_o$ enthalten und die individuellen Oligomere bzw. Polymere nicht alleine, sondern als Gemisch wenigstens 30 Gew.-%, insbesondere wenigstens 50 Gew.-% und speziell wenigstens 60 Gew.-% aller härtbaren Bestandteile der Lackformulierung F ausmachen, reicht es aus, wenn das Gewichtsmittel der individuellen Quotienten $\alpha/T_o$ den für Merkmal (B) angegebenen Wert aufweist, um das Merkmal (B) zu erfüllen.

Das Gewichtsmittel der Quotienten $\alpha/T_o$, im Folgenden $\alpha/T_o$ (Mittel), lässt sich gemäß der folgenden Formel (1) berechnen:

$$\alpha/T_o \text{ (Mittel)} = m(1) * \alpha/T_o(1) + m(2) * \alpha/T_o(2) + \ldots\ldots m(n) * \alpha/T_o(n) \qquad (1)$$

wobei m(1), m(2), .... und m(n) für die Massenanteile der jeweiligen Oligomere bzw. Polymere 1, 2 ... n stehen und $\alpha/T_o(1)$, $\alpha/T_o(2)$, ......... $\alpha/T_o(n)$ für die Quotienten $\alpha/T_o$ der individuellen Oligomere bzw. Polymere stehen.

Hinsichtlich der Erzeugung eines Soft-Feel Effekts weisen vorzugsweise wenigstens 30 Gew.-%, insbesondere wenigstens 40 Gew.-% besonders bevorzugt wenigstens 50 Gew.-% und speziell wenigstens 60 Gew.-% oder alle in der jeweiligen Lackformulierung F enthaltenen Oligomere bzw. Polymere einen Quotienten $\alpha/T_o$ mit einem für Merkmal (B) angegebenen Wert auf. Vorzugsweise machen die Oligomere bzw. Polymere, die einen Quotienten $\alpha/T_o$ mit einem für Merkmal (B) angegebenen Wert aufweisen, wenigstens 20 Gew.-%, insbesondere wenigstens 30 Gew.-% und speziell wenigstens 40 Gew.-% der härtbaren Bestandteile der Lackformulierung aus.

Vorzugsweise weisen Oligomere bzw. Polymere, die einen Quotienten $\alpha/T_o$ mit einem für Merkmal (B) angegebenen Wert aufweisen, eine Onset-Temperatur $T_o$ im Bereich von 180 bis 230 K auf. Vorzugsweise liegt die Netzbo-genlänge $\alpha$ derartiger Oligomere bzw. Polymere im Bereich von 220 bis 3000 g/mol, insbesondere im Bereich von 235 bis 2500 g/mol, speziell im Bereich von 255 bis 2000 g/mol und ganz speziell im Bereich von 270 bis 1500 g/mol.

Beispiele für Oligomere und Polymere, die einen Quotienten $\alpha/T_o$ mit einem für Merkmal (B) angegebenen Wert aufweisen, sind aliphatische Urethanacrylate mit einem zahlenmittleren Molekulargewicht $M_n$ im Bereich von 600 bis 6000 g/mol und einer mittleren Funktionalität im Bereich von 1,8 bis 8,5 Doppelbindungen pro Molekül, insbesondere 1,8 bis 6,5 Doppelbindungen pro Molekül.

Beispiele für derartige Oligomere und Polymere, die einen Quotienten $\alpha/T_o$ mit einem für Merkmal (B) angegebenen Wert aufweisen, sind außerdem aliphatische Polyetheracrylate mit einem zahlenmittleren Molekulargewicht $M_n$ im Bereich von 600 bis 1800 g/mol und einer mittleren Funktionalität im Bereich von 1,8 bis 6,5 Doppelbindungen pro Molekül, insbesondere 1,8 bis 5,0 Doppelbindungen pro Molekül.

Beispiele für derartige Oligomere und Polymere, die einen Quotienten $\alpha/T_o$ mit einem für Merkmal (B) angegebenen Wert aufweisen, sind außerdem aliphatische Polyesteracrylate mit einem zahlenmittleren Molekulargewicht $M_n$ im Bereich von 600 bis 3000 g/mol und einer mittleren Funktionalität im Bereich von 2,0 bis 6,5 Doppelbindungen pro Molekül, insbesondere 1,8 bis 5,0 Doppelbindungen pro Molekül.

Beispiele für derartige Oligomere und Polymere, die einen Quotienten $\alpha/T_o$ mit einem für Merkmal (B) angegebenen Wert aufweisen, sind außerdem aliphatische Polycarbonatacrylate (wie beschrieben in US 7,649,074 B2, Spalte 16, Zeile 51) mit einem zahlenmittleren Molekulargewicht $M_n$ im Bereich von 600 bis 3000 g/mol und einer mittleren Funktionalität im Bereich von 2 bis 15 Doppelbindungen pro Molekül, insbesondere 2 bis 10 Doppelbindungen pro Molekül.

Hinsichtlich der Erzeugung eines Soft-Feel Effekts hat es sich weiterhin bewährt, wenn der massenmittlere Quotient $\alpha/T_o$, gemittelt über alle härtbaren Bestandteile der Lackformulierung F wenigstens 1,1 und insbesondere wenigstens 1,2 beträgt (Merkmal (C)). Der massenmittlere Quotient $\alpha/T_o$ (Massenmittel) kann nach folgender Formel (2) berechnet werden:

$$\alpha/T_o \text{ (Massenmittel)} = w(1) \ast \alpha/T_o(1) + w(2) \ast \alpha/T_o(2) + \ldots\ldots\ldots w(n) \ast \alpha/T_o(n) \qquad (2)$$

wobei w(1), w(2), .... und w(n) für die Massenanteile der jeweiligen Oligomere bzw. Polymere 1, 2 ... n an der Gesamtmasse aller härtbaren Bestandteile in der Lackformulierung F stehen und $\alpha/T_o(1)$, $\alpha/T_o(2)$, .......... $\alpha/T_o(n)$ für die Quotienten $\alpha/T_o$ der individuellen Oligomere bzw. Polymere stehen.

In den Gruppen 1, 1a und 1b von Ausführungsformen hat es sich bewährt, wenn wenigstens 90 % oder 100 %, bezogen auf die Gesamtmenge der in der Lackformulierung F enthaltenen ethylenisch ungesättigten Doppelbindungen, in Form von Acryl- oder Methacrylgruppen, insbesondere in Form von Acrylat- oder Methacrylatgruppen und speziell als Acrylatgruppen vorliegen.

Bevorzugte Oligomere und Polymere von Lackformulierungen F, welche den Gruppen 1, 1a und 1b von Ausführungsformen entsprechen, sind ausgewählt unter Urethanacrylaten, Polyesteracrylaten, Polyetheracrylaten, Epoxyacrylaten, Polycarbonatacrylaten und deren Mischungen. In den Gruppen 1, 1a und 1b von Ausführungsformen sind solche Lackformulierungen F bevorzugt, in denen die Oligomere bzw. Polymere unter Urethanacrylaten, Polyesteracrylaten, Polyetheracrylaten, Polycarbonatacrylaten und deren Mischungen sowie Mischungen davon mit aromatischen Epoxyacrylaten ausgewählt sind, insbesondere solche Mischungen, in denen die unter Urethanacrylaten, Polyesteracrylaten, Polyetheracrylaten, Polycarbonatacrylaten und deren Mischungen ausgewählten Oligomere bzw. Polymere wenigstens 50 Gew.-% und insbesondere wenigstens 60 Gew.-% der die Beschichtung bildenden Bestandteile ausmachen.

In den Gruppen 1, 1a und 1b von Ausführungsformen sind solche Lackformulierungen F besonders bevorzugt, in denen die Lackformulierung F wenigstens ein Oligomer als Hauptbestandteil enthält, das unter aliphatischen Urethanacrylaten, aliphatischen Polyetheracrylaten, aliphatischen Polyesteracrylaten, aliphatischen Polycarbonatacrylaten und deren Mischungen ausgewählt ist.

In den Gruppen 1, 1a und 1b von Ausführungsformen sind solche Lackformulierungen F besonders bevorzugt, in denen die Oligomere bzw. Polymere unter aliphatischen Urethanacrylaten, aliphatischen Polyesteracrylaten, aliphatischen Polyetheracrylaten, aliphatischen Polycarbonatacrylaten und deren Mischungen sowie Mischungen davon mit aromatischen Epoxyacrylaten ausgewählt sind. Hierunter sind insbesondere solche Mischungen bevorzugt, in denen die unter aliphatischen Urethanacrylaten, aliphatischen Polyesteracrylaten, aliphatischen Polyetheracrylaten, aliphatischen Polycarbonatacrylaten und deren Mischungen ausgewählten Oligomere bzw. Polymere wenigstens 50 Gew.-% und insbesondere wenigstens 60 Gew.-% der die Beschichtung bildenden Bestandteile ausmachen.

Die Lackformulierungen F der Gruppen 1, 1a und 1b von Ausführungsformen können neben den Oligomeren bzw. Polymeren ein oder mehrere Monomere, insbesondere die als zuvor bevorzugt genannten Monomere, als Reaktivverdünner enthalten. Für diese Gruppe 1 sind insbesondere Monomere bevorzugt, die im Mittel 1 bis 4 ethylenisch ungesättigte Gruppen, insbesondere Acrylatgruppen pro Molekül aufweisen. In diesen Lackformulierungen F bildet das Oligomer bzw. das Polymer den Hauptbestandteil der härtbaren Bestandteile der Zusammensetzung, d. h. das bzw. die Oligomere bzw. Polymere machen wenigstens 40 Gew.-%, insbesondere wenigstens 50 Gew.-%, speziell wenigstens 55 Gew.-% oder wenigstens 60 Gew.-%, bezogen auf die Gesamtmenge an Oligomer bzw. Polymere und Monomer aus. Das Gewichtsverhältnis der Gesamtmenge an Oligomere bzw. Polymere zur Gesamtmenge an Monomer liegt dann insbesondere im Bereich von 1 : 1 bis 100 : 1 und speziell im Bereich von 1,2 : 1 bis 50 : 1.

Die Lackformulierungen F der Gruppen 1, 1a und 1b von Ausführungsformen enthalten vorzugsweise wenigstens einen Photoinitiator I, der eine Absorptionsbande mit einem Maximum $\lambda_{max}$ im Bereich von 340 bis 420 nm und speziell im Bereich von 350 bis 410 nm aufweist. In bevorzugten Ausführungsformen der Gruppen 1, 1a und 1b enthalten die Lackformulierungen F neben dem Photoinitiator I vorzugsweise wenigstens einen weiteren Photoinitiator II, der eine Absorptionsbande mit einem Maximum $\lambda_{max}$ im Bereich von 220 bis 340 nm und speziell im Bereich von 230 bis 320 nm aufweist. Vorzugsweise liegt dann das Gewichtsverhältnis von Photoinitiator I zu Photoinitiator II im Bereich von 5 :

1 bis 1 : 20. Bezüglich der bevorzugten Photoinitiatoren I und II in den Lackformulierungen F der Ausführungsformen 1,1a und 1b gilt das zuvor Gesagte sinngemäß. Bezüglich der Mengen an Photoinitiatoren in den Lackformulierungen F der Ausführungsformen 1, 1a und 1b gilt das zuvor Gesagte ebenfalls sinngemäß.

Für die Herstellung matter Oberflächen mit einem Glanzgrad bei 60° von mehr als 5 GU(60°) hat es sich als vorteilhaft erwiesen, wenn die Lackformulierungen F neben wenigstens einem der Merkmale (A), (B) und (C) auch das Merkmal (D) aufweisen. Lackformulierungen F, die eines oder mehrere der Merkmale (A), (B) und (C) sowie das Merkmal (D) aufweisen, werden im Folgenden auch als Gruppe 2 von Ausführungsformen bezeichnet. Dementsprechend betrifft eine zweite Gruppe 2 von Ausführungsformen der Erfindung ein Verfahren, bei dem Lackformulierungen F zum Einsatz kommen, die das Merkmal (D) und eines oder mehrere der Merkmale (A), (B) und (C) aufweisen. Die Lackformulierungen F der Gruppe 2 weisen vorzugsweise auch das Merkmal (A) auf. In einer Untergruppe 2a von Ausführungsformen der Erfindung weisen die Lackformulierungen F der Gruppe 2 das Merkmal (B) nicht auf. In dieser Untergruppe weisen die Lackformulierungen vorzugsweise das Merkmal (C) auf (Untergruppe (2aa)). In einer Untergruppe 2b von Ausführungsformen der Erfindung weisen die Lackformulierungen F der Gruppe 2 die Merkmale (A), (B) und (D) und gegebenenfalls (C) auf.

Geeignete aromatische Epoxyacrylate in den Lackformulierungen F der Gruppe von Ausführungsformen 2, 2a, 2aa und 2b sind vor allem die Umsetzungsprodukte von aromatischen Polyglycidylethern mit Acrylsäure und/oder mit hydroxy-funktionalisierten Acrylverbindungen, insbesondere mit Hydroxyalkylacrylaten, z. B. mit Hydroxyethylacrylat, Hydroxypropylacrylat oder Hydroxybutylacrylat. Die zur Herstellung eingesetzten aromatischen Polyglycidylether weisen typischerweise im Mittel 2 bis 4 Glycidylgruppen pro Molekül auf. Bevorzugte aromatische Polyglycidylether zur Herstellung von aromatischen Epoxyacrylaten sind Polyglycidylether auf Basis von Novolacken und Polyglycidylether auf Basis von Bisphenolen wie Bisphenol A oder Bisphenol F. Hierunter bevorzugt sind die Umsetzungsprodukte von aromatischen Polyglycidylethern auf Basis von Novolacken mit Hydroxyalkylacrylaten sowie die Umsetzungsprodukte von aromatischen Polyglycidylethern auf Basis von Bisphenolen wie Bisphenol A oder Bisphenol F mit Hydroxyalkylacrylaten und/oder Acrylsäure. Besonders bevorzugt sind aromatische Epoxyacrylate, deren zahlenmittleres Molekulargewicht $M_n$ im Bereich von 500 bis 4000 g/mol liegt.

Vorzugsweise enthalten die Lackformulierungen F der Ausführungsformen 2, 2a und 2b das aromatische Epoxyacrylat in einem Anteil von wenigstens 40 Gew.-% und speziell in einer Menge von wenigstens 50 Gew-%, z. B. in einer Menge von 40 bis 100 Gew.-% und speziell in einer Menge von 50 bis 90 Gew.-%, bezogen auf das Gesamtgewicht der in der Lackformulierung F enthaltenen härtbaren Bestandteile. Vorzugsweise enthalten die Lackformulierungen F der Ausführungsformen 2, 2a und 2b wenigstens einen weiteren Bestandteil, der unter Mattierungsmitteln, insbesondere unter Siliciumdioxid-basierten Mattierungsmitteln, Wachsen und Inertharzen ausgewählt ist. Hierdurch erreicht man eine bessere Egalisierung der Oberfläche und damit eine gleichmäßigere Ausbildung des Mattierungseffekts. Die Gesamtmenge derartiger weiterer Bestandteile liegt im Bereich von 0.2 bis 10 Gew.-% und insbesondere im Bereich von 0,3 bis 8 Gew.-%, bezogen auf das Gesamtgewicht der härtbaren Bestandteile in der Lackformulierung F. Bezüglich der Mengenanteile der jeweiligen weiteren Bestandteile gilt das zuvor Gesagte in besonderem Maße auch für die Lackformulierungen F der Ausführungsformen 2, 2a, 2aa und 2b.

Erfindungsgemäß wird im ersten Schritt i. die Lackformulierung F in Form einer ungehärteten Lackschicht auf der Oberfläche des zu beschichteten Substrats bereitgestellt. Die Bereitstellung der ungehärteten Lackschicht erfolgt nach üblichen, dem Fachmann bekannten Verfahren, wobei man wenigstens die Lackformulierung F auf das zu beschichtende Substrat in der gewünschten Auftragsmenge aufbringt und anschließend, sofern erforderlich, die gegebenenfalls vorhandenen flüchtigen Bestandteile der Lackformulierung F entfernt. Dieser Vorgang wird auch als Ablüften bezeichnet und ist als ein physikalisches Trocknen der flüssigen Lackschicht zu verstehen, so dass vor Schritt ii. im Wesentlichen nur diejenigen Bestandteile in der ungehärteten Lackschicht verbleiben, die später nicht Bestandteil der fertigen Beschichtung sind.

Das Aufbringen bzw. Auftragen der Lackformulierung F erfolgt nach den dem Fachmann bekannten Methoden, z. B. durch Spritzen, Spachteln, Rakeln, Bürsten, Rollen, Walzen, Gießen oder Düsenauftrag. Die Auftragsmenge wird in der Regel so gewählt, dass nach dem Ablüften, d. h. nach Entfernung etwaiger flüchtiger Bestandteile der Lackformulierung F, ein Auftrag von wenigstens 3 g/m², z. B. 3 bis 400 g/m², insbesondere 3 bis 200 g/m² und speziell 3 bis 80 g/m² resultiert. Bei derartigen Auftragsmengen resultieren nach Durchführung des Schritts iv. typischerweise Schicht- dicken von wenigstens 3 $\mu$m, z. B. 3 bis 400 $\mu$m, insbesondere 3 bis 200 $\mu$m und speziell 3 bis 80 $\mu$m. Hierbei gilt, dass die Schichtdicke in $\mu$m näherungsweise der Auftragsmenge nach dem Ablüften in g/m² entspricht. Dies gilt insbesondere bei den sogenannten 100%-Systemen, da diese ausschließlich aus Substanzen bestehen, die in der gehärteten Schicht verbleiben und derartige Lackformulierungen bei der Aushärtung keinen signifikanten Volumenschrumpf zeigen, d. h. der Volumenschrumpf liegt typischerweise unter 10 Vol.-%.

Die Vorteile des erfindungsgemäßen Verfahrens kommen insbesondere bei der Herstellung von dünnen Beschichtungen mit Schichtdicken unterhalb 20 $\mu$m zum Tragen.

Dementsprechend eignet sich das erfindungsgemäße Verfahren insbesondere zur Herstellung von Beschichtungen, die eine Schichtdicke im Bereich von 3 bis < 20 $\mu$m, insbesondere im Bereich von 3 bis 18 $\mu$m und speziell im

Bereich von 5 bis 16 μm aufweisen. Dementsprechend wird die Auftragsmenge in diesen Fällen so gewählt, dass nach dem Ablüften, d. h. nach Entfernung etwaiger flüchtiger Bestandteile der Lackformulierung F, ein Auftrag von weniger als 20 g/m$^2$, z. B. 3 bis < 20 g/m$^2$, insbesondere 3 bis 18 g/m$^2$ und speziell 5 bis 16 g/m$^2$ resultiert.

Geeignete Substrate für das erfindungsgemäße Verfahren sind beispielsweise Holz, Papier, einschließlich Pappe und Karton, Textil, Leder, Vlies, Kunststoffoberflächen, Glas, Keramik, mineralische Baustoffen, wie Zement-Formsteine und Faserzementplatten, sowie Metalle, einschließlich beschichteter Metalle. Bei den Kunststoffoberflächen sind vor allem Oberflächen aus den folgenden Materialien zu nennen: Polycarbonat, Polyethylen, beispielsweise PE, HDPE, LDPE, Polypropylen, beispielsweise PP, orientiertes PP (OPP), bisaxial orientiertes PP (BOPP), Polyamid, beispielsweise Nylon®, Polyester, beispielsweise Polyethylenterephthalat (PET), Polybutylenterephthalat (PBT) und Polyethylenfuranoat (PEF).

Bevorzugte Substrate sind nicht saugfähig, d. h. nicht so porös, dass beim Aufbringen die Lackformulierung F im Wesentlichen nur in das Substrat eindringen würde. Bevorzugte nicht poröse Substrate sind vor allem Holz, Holzwerkstoffe, Kunststoffoberflächen, Glas, Keramik, sowie Metalle, einschließlich beschichteter Metalle. Bevorzugt sind vor allem flächige Substrate, d. h. Substrate, die keine spitzen Kanten oder Winkel < 150° in der zu beschichteten Oberfläche aufweisen.

Die Substrate können gegebenenfalls vorbehandelt und/oder vorbeschichtet sein. Beispielsweise können Kunststofffolien vor Applikation mit Corona-Entladungen behandelt oder mit einer Grundierung (Primer) vorbeschichtet werden. Ebenso werden mineralische Baustoffe in der Regel vor dem Aufbringen der Lackformulierung F mit einer Grundierung versehen.

Mit besonderem Vorteil kann das erfindungsgemäße Verfahren zur Beschichtung von Holz und Holzwerkstoffen eingesetzt werden. Als Holz sind vor allem die folgenden Hölzer zu nennen: Eiche, Fichte, Kiefer, Buche, Ahorn, Nussbaum, Macoré, Kastanie, Platane, Robinie, Esche, Birke, Pinie und Ulme, sowie Kork. Als Holzwerkstoffe sind vor allem Vollholz- und Furnierholzwerkstoffe wie Brettsperrholzplatten, Brettschichtholzplatten, Stabsperrholzplatten, Furniersperrholzplatten, Furnierschichtholzplatten, Furnierstreifenholzplatten, Biegesperrholz, Spanplatten, z. B. Flachpressplatten, Strangpressplatten, Grobspanplatte (OSL) und Spanstreifenholz, Faserplatten, z. B. mitteldichte Faserplatten (MDF), hochdichte Faserplatten (HDF), Holzfaserdämmplatten (HFB), mittelharte Faserplatten (MB) und Hartfaserplatten (HFH), Holz-Kunststoff-Komposite sowie mit Furnierholz beschichtete Substrate.

In Schritt ii. wird die in Schritt i. erhaltene Lackschicht mit UV-Licht bestrahlt, dessen Wellenlänge im Wesentlichen im Bereich von 250 nm bis 420 nm, vorzugsweise im Wesentlichen im Bereich von 300 nm bis 420 nm und speziell Wesentlichen im Bereich von 350 bis 420 nm liegt. Hierbei polymerisiert ein Teil der ethylenisch ungesättigten Doppelbindungen der härtbaren Bestandteile in der ungehärteten Lackschicht, so dass die Lackschicht teilweise härtet aber noch nicht durchgehärtet ist. Dieser Vorgang wird auch als Angelieren bezeichnet.

Die zum Angelieren erforderliche Strahlungsdosis wird in der Regel so gewählt, dass nicht mehr als 80 %, insbesondere nicht mehr als 70 % und speziell nicht mehr als 60 %, z. B. 10 bis 80 %, insbesondere 20 bis 70 % und speziell nicht mehr als 30 bis 60 % der in der Lackschicht enthaltenen, ethylenisch ungesättigten Doppelbindungen polymerisieren. Der Anteil der polymerisierten Doppelbindungen kann mittels IR-Spektroskopie bestimmt werden. Die zum Angelieren erforderliche Strahlungsdosis liegt in der Regel im Bereich von 20 bis 200 mJ/cm$^2$, vorzugsweise bei 30 bis 180 mJ/cm$^2$. Insbesondere erfolgt das Angelieren durch Bestrahlung mit UV-Strahlung, die im Wesentlichen Strahlung im Wellenlängenbereich von 350 bis 420 nm aufweist, mit einer Strahlendosis im Bereich von 20 bis 200 mJ/cm$^2$ und speziell im Bereich von 30 bis 180 mJ/cm$^2$.

Die Bestrahlung in Schritt ii. erfolgt vorzugsweise in einer sauerstoffhaltigen Atmosphäre, insbesondere in einer Atmosphäre, die wenigstens 15 Vol.-% Sauerstoff enthält, und speziell unter atmosphärischen Bedingungen. Unter atmosphärischen Bedingungen versteht man Bedingungen unter Umgebungsatmosphäre, d. h. unter Luft, d. h. Bedingungen, bei denen es sich nicht um Inertgasbedingungen und/oder um eine sauerstoffreduzierte Atmosphäre handelt.

Als Strahlungsquellen für UV-Licht im angegebenen Wellenlängenbereich in Schritt ii. dienen beispielsweise UV-A emittierende Strahler, z. B. Leuchtstoffröhren, LED-Lampen, die z. B. von der Firma Panacol-Elosol GmbH, Steinbach, Bundesrepublik Deutschland, unter der Bezeichnung UV-H 254, Quick-Start UV 1200, UV-F 450, UV-P 250C, UV-P 280/6 oder UV-F 900 vertrieben werden, Hoch- oder Mitteldruckquecksilberdampflampen, wobei der Quecksilberdampf durch Dotierung mit anderen Elementen wie Gallium oder Eisen modifiziert sein kann, gepulste Lampen (unter der Bezeichnung UV-Blitzlichtstrahler bekannt) sowie Halogenlampen. Weitere geeignete UV-Strahler oder -Lampen werden beschrieben in R. Stephen Davidson, "Exploring the Science, Technology and Applications of U.V. and E.B. Curing", Sita Technology Ltd., London, 1999, Kapitel I, "An Overview", S. 16, Figur 10, oder von Dipl.-Ing. Peter Klamann, "eltosch System-Kompetenz, UV-Technik, Leitfaden für Anwender", Seite 2, Oktober 1998.

Vorzugsweise werden im erfindungsgemäßen Verfahren in Schritt ii. LED-Strahler verwendet, die nicht nur eine genaue Dosierung, sondern auch eine genaue Einstellung des Wellenlängenbereichs erlauben. Hierdurch können gezielt die Bedingungen zur Erzeugung homogen matter Oberflächen mit dem gewünschten Glanzgrad und Soft-Feel Effekt eingehalten werden.

Anschließend wird in Schritt iii. die in Schritt ii. erhaltene Beschichtung mit UVC-Licht der Wellenlänge im Bereich von 120 nm bis 250 nm, vorzugsweise im Bereich von 150 nm bis 225 nm, besonders bevorzugt im Bereich von 150 bis 200 nm bestrahlt. Hierdurch wird eine Mikrofaltung in der Oberfläche der angelierten Lackschicht erzielt. Die in Schritt iii. angewendete Strahlungsdosis liegt im Bereich von 10 bis 150 mJ/cm$^2$ und speziell im Bereich von 15 bis 100 mJ/cm$^2$.

Erfindungsgemäß erfolgt die Bestrahlung in Schritt iii. unter einer Intertgasatmosphäre. Unter Inertgasatmosphäre versteht man eine im Wesentlichen sauerstofffreie Atmosphäre, d. h. eine Atmosphäre, die weniger als 0,5 Vol.-%, insbesondere weniger als 0,1 Vol.-% und speziell weniger als 0,05 Vol.-% Sauerstoff enthält. In der Regel erreicht man eine Inertgasatmosphäre durch Spülen des Bereichs, welcher der UVC-Strahlung ausgesetzt ist, mit einem Inertgasstrom. Durch die Inertgasatmosphäre wird zum einen eine unerwünschte Ozonbildung verhindert und zum anderen eine Inhibierung der Polymerisation der Lackschicht vermieden. Als Intergase kommen beispielsweise Stickstoff, Kohlendioxid, Verbrennungsgase, Helium, Neon oder Argon in Betracht. Besonders bevorzugt wird Stickstoff verwendet. Dieser Stickstoff sollte nur geringste Mengen Fremdgase wie zum Beispiel Sauerstoff enthalten. Bevorzugt werden Reinheitsgrade von < 500 ppm Sauerstoff eingesetzt.

Für Schritt iii. geeignete Strahlungsquellen sind vor allem Excimer-UV-Lampen, die UV-Licht im Bereich von 120 nm bis 250 nm, vorzugsweise im Bereich von 150 nm bis 225 nm, besonders bevorzugt von 172 nm emittieren.

Da die Polymerisation in Schritt ii. sehr rasch stattfindet, kann Schritt iii. in der Regel unmittelbar im Anschluss an Schritt ii. durchgeführt werden, wobei längere Zeitintervalle zwischen Schritt ii. und Schritt iii. unkritisch sind. Häufig beträgt der zeitliche Abstand zwischen den Schritten ii. und iii. nur wenige Sekunden, z. B. 1 bis 30 s oder weniger, und ist lediglich durch relative Anordnungen der Bestrahlungsvorrichtungen und andere logistische und anlagenbedingte Parameter bestimmt.

In Schritt iv. wird die in Schritt iii. erhaltene Lackschicht mit UV-Strahlung oder mit Elektronenstrahlung bestrahlt. Hierbei polymerisiert der verbliebene Anteil der ethylenisch ungesättigten Doppelbindungen der härtbaren Bestandteile weitgehend oder vollständig, so dass die Lackschicht ausgehärtet bzw. durchgehärtet ist. Bevorzugt ist die Bestrahlung mit UV-Strahlung. Bei einer Bestrahlung mit UV-Strahlung liegt die Wellenlänge der UV-Strahlung im Wesentlichen im Bereich von 250 nm bis 420 nm, vorzugsweise im Wesentlichen im Bereich von 300 nm bis 420 nm und speziell im Wesentlichen im Bereich von 350 bis 420 nm.

Die zum Aushärten erforderliche Strahlungsdosis beträgt im Falle von UV-Strahlung in der Regel wenigstens 100 mJ/cm$^2$ und speziell wenigstens 150 mJ/cm$^2$. Häufig liegt die Strahlungsdosis in Schritt iv. im Bereich von 100 bis 4000 mJ/cm$^2$, insbesondere im Bereich von 150 bis 2500 mJ/cm$^2$. Insbesondere erfolgt das Aushärten in Schritt iv. durch Bestrahlung mit UV-Strahlung, die im Wesentlichen Strahlung im Wellenlängenbereich von 350 bis 420 nm aufweist, mit einer Strahlendosis im Bereich von 100 bis 4000 mJ/cm$^2$, insbesondere im Bereich von 150 bis 2500 mJ/cm$^2$. Im Falle von Elektronenstrahlung (150 bis 300 kV) wird man in Schritt iv. üblicherweise eine Dosis von 10 bis 100 kGy, vorzugsweise von 20 bis 50 kGy anwenden.

Für die Erzielung eines guten Soft-Feel Effekts hat es sich als vorteilhaft erwiesen, wenn Schritt iv. unter Verwendung von UV-Strahlung erfolgt und die Strahlendosis in Schritt iv. einen Wert von 700 und insbesondere einen Wert von 600 nicht überschreitet und insbesondere im Bereich von 100 bis 700 mJ/cm$^2$, speziell im Bereich von 150 bis 600 mJ/cm$^2$ liegt. Diese Bereiche für die Strahlendosis gelten insbesondere dann, wenn Lackformulierungen F gemäß den Gruppen 1, 1a und 1b der Ausführungsformen zum Einsatz kommen und insbesondere bei solchen Ausführungsformen, die nur das Merkmal (A), nicht aber das Merkmal (B) aufweisen, sowie bei Lackformulierungen F mit einem hohen Wert von Merkmal (A), z. B. im Bereich von 4,5 bis 6 und/oder bei Lackformulierungen, deren Hauptbestandteil einen niedrigen Wert des Merkmals (B) aufweist, z. B. einen Wert im Bereich von 1,2 bis 1,4.

Sofern weniger der Soft-Feel Effekt, sondern die Mattierung im Vordergrund steht, können in Schritt iv. auch höhere Strahlendosen eingesetzt werden, z. B. eine Strahlendosis im Bereich von 500 bis 4000 mJ/cm$^2$, insbesondere im Bereich von 600 bis 2500 mJ/cm$^2$. Diese Strahlendosen gelten insbesondere dann, wenn Lackformulierungen F mit dem Merkmal (D) zum Einsatz kommen, insbesondere Lackformulierungen F der Ausführungsformen gemäß den Gruppen 2, 2a und 2aa.

Die Bestrahlung in Schritt iv. kann unter Inertgasatmosphäre oder in einer sauerstoffhaltigen Atmosphäre, die wenigstens 15 Vol.-% Sauerstoff enthält erfolgen. Vorzugsweise erfolgt Schritt iv. in einer sauerstoffhaltigen Atmosphäre, die wenigstens 15 Vol.- % Sauerstoff enthält, und speziell unter atmosphärischen Bedingungen. Des Weiteren kann die Bestrahlung erfolgen, indem die Beschichtung mit für die Strahlung transparenten Medien abgedeckt wird. Beispiele hierfür sind z. B. Kunststofffolien. Sofern die Bestrahlung in Schritt iv. mittels Elektronenstrahlung erfolgt, wird man vorzugsweise unter Inertgasatmosphäre arbeiten.

Da die Mikrofaltung bei hochviskosen Lackformulierungen F, insbesondere solchen mit einer Viskosität > 20 Pa.s etwas langsamer vonstattengeht, wird man bei Verwendung hochviskoser Lackformulierungen in der Regel eine gewisse Wartezeit zwischen den Schritten iii. und iv. einhalten. Bei Lackformulierungen F mit geringerer Viskosität von maximal 20 Pa.s findet die Mikrofaltung in Schritt iii. ausreichend rasch statt, so dass der zeitliche Abstand zwischen der Durchführung der Schritte iii. und iv. nicht relevant ist. In der Regel erfolgt der Schritt iv. dann unmittelbar im Anschluss an Schritt iii., wobei längere Zeitintervalle zwischen Schritt iii. und Schritt iv. unkritisch sind. Häufig beträgt der zeitliche Abstand zwischen den Schritten iii. und iv. nur wenige Sekunden, z. B. 1 bis 30 s oder weniger und ist lediglich durch relative Anordnungen der Bestrahlungsvorrichtungen und andere logistische und anlagenbedingte Parameter bestimmt. Bei Viskositäten oberhalb 20 Pa∗s empfiehlt es sich, zwischen Schritt iii. und iv. eine Wartezeit von wenigstens 30 s, insbesondere wenigstens 60 s einzuhalten.

Die in den Schritten ii., iii. und iv. verwendeten Strahler können ortsunbeweglich installiert sein, so dass das zu bestrahlende Gut mittels einer mechanischen Vorrichtung an der Strahlungsquelle vorbeibewegt wird, oder die Strahler können beweglich sein und das zu bestrahlende Gut verändert bei der Vorgelierung seinen Ort nicht.

Bei der Härtung unter atmosphärischen Bedingungen können die Strahler ortsunbeweglich installiert sein, oder die Strahler können beweglich sein. Bei der Härtung unter Inertgasbedingungen sind die Strahler vorzugsweise ortsunbeweglich installiert.

Bei der im erfindungsgemäßen Verfahren erhältlichen Beschichtung handelt es sich typischerweise um die äußerste bzw. oberste Beschichtung. Bei den beschichteten Materialien kann es sich um das eigentliche Verkaufsprodukt handeln oder es kann Bestandteil eines Verkaufsprodukts sein, d. h. es schließen sich an das Beschichtungsverfahren weitere Montageschritte an.

Die folgenden Beispiele dienen der Erläuterung der Erfindung. Hierbei werden die folgenden Abkürzungen verwendet:

| | |
|---|---|
| DF | Doppelbindungsfunktionalität in C=C-Doppelbindungen pro Molekül |
| DPGDA | Dipropylenglykoldiacrylat |
| EA | Epoxyacrylat |
| GU | Glanzgrad |
| GR | Gleitreibung |
| HV | Härtungsverfahren |
| i.O. | in Ordnung |
| n.i.O. | nicht in Ordnung |
| n.b. | nicht bestimmbar |
| MK | Mikrokratzbeständigkeit |
| MH | Martenshärte |
| Mn | Zahlenmittleres Molekulargewicht |
| PEA | Polyetheracrylat |
| PESA | Polyesteracrylat |
| RH | Rauheit |
| $T_o$ | Onset-Temperatur des Glasübergangs |
| TBCH | Tert.-Butylcyclohexylacrylat |
| TPGDA | Tripropylenglykoldiacrylat |
| UA | Urethanacrylat |

Eingesetzte Rohstoffe:

- Aliphatisches Polyesteracrylat (1) (PESA 1); Mn = 1770 g/mol; Viskosität 10,5 Pa∗s; DF 4,1, $T_o$ = 222,65 K, Netzbogenlänge 423 g/mol.
- Aliphatisches Polyetheracrylat (1) (PEA 1); Mn = 1090 g/mol; Viskosität 460 mPa*s; DF 2,9; $T_o$ = 210,65 K, Netzbogenlänge 376 g/mol.
- Aliphatisches Urethanacrylat (1) (UA 1); Mn = 970 g/mol; Viskosität 14,0 Pa*s; DF 7,2; $T_o$ = 230,45 K, Netzbogenlänge 135 g/mol.
- Aliphatisches Polyesteracrylat (2) (PESA 2): Mn = 860 g/mol; Viskosität ca. 250 mPa*s; DF = 3,8 C; $T_o$ = 214,85 K, Netzbogenlänge 226 g/mol.
- Aromatisches Epoxyacrylat (1) auf Basis von Bisphenol A (EA 1) in Form eines Gemischs mit 45 Gew.-% 3-fach ethoxyliertes Trimethylolpropantriacrylat; Mn = 570 g/mol; Viskosität 4,5 Pa*s; DF = 2,5; $T_o$ = 227,95 K, Netzbogenlänge 228 g/mol.
- Aliphatisches Urethanacrylat (2) (UA 2); Mn = 812 g/mol; Viskosität 12,9 Pa*s; DF = 1,9; $T_o$ = 222,65 K, Netzbogenlänge 427 g/mol.
- Aromatisches Epoxyacrylat auf Basis von Bisphenol A (2), 75 Gew.-% in TPGDA (EA2): Mn = 520 g/mol; Viskosität 14,5 Pa*s; DF = 2,0; $T_o$ = 230,25 K, Netzbogenlänge 260 g/mol.
- Aliphatisches Polyetheracrylat (2) (PEA 2): Mn = 320 g/mol; Viskosität 18 mPa*s; DF = 2,0; $T_o$ = 208,15 K, Netzbogenlänge 160 g/mol.
- DPGDA: Mn = 242 g/mol; Viskosität ca. 8 mPa*s; DF = 2,0; $T_o$ = 193,65 K, Netzbogenlänge 121 g/mol.
- TBCH: Mn = 210 g/mol; Viskosität ca. 8 mPa∗s; DF = 1, .

- Inertharz (1): Harnstoff-Formaldehyd-Harz mit einem Erweichungsbereich von 80 bis 95 °C und einer Glasübergangstemperatur von etwa 57 °C.
- Mattierungsmittel (1), kieselsäurebasiert: Syloid® MX 307 der Fa. W.R. Grace
- Mikronisiertes Wachs: Partikelgröße $d_{50}$ 5 $\mu$m, MjuWax® der Fa. Ceronas GmbH&Co. KG
- Mikronisierter Kaolin: Partikelgröße $d_{50}$ 2,5 $\mu$m
- Fotoinitiator 1: 2.4.6-Trimethylbenzoylphenylphosphinat
- Fotoinitiator 2: Methylbenzoylformat (Phenylglyoxalsäuremethylester)

Analytik der Rohstoffe:

Viskositäten wurden DIN 53019:2008-05 mittels eines Kegel-Platte Viskosimeters, I.C.I. Cone & Plate Viscosimeter, EIC Esprecht Instruments & Control AG, bei einer Temperatur von 23 °C und einem Schergefälle von 10000 s$^{-1}$ bei 0 - 1 Pa∗s, 2500 s$^{-1}$ bei 1 - 4 Pa∗s, 800 s$^{-1}$ bei 4 - 12,5 Pa∗s und 200 s$^{-1}$ bei > 12,5 Pa∗s bestimmt. Die Genauigkeit der Methode liegt bei ±2% des Messwertes.

Die Bestimmung der Glasübergangstemperatur erfolgte mit einem Mettler Toledo DSC823e DSC-Gerät der Fa. Mettler Toledo AG nach der in DIN EN ISO 11357-2:2014-07 angegebenen Methode mit einer Aufheizrate von 10 K min$^{-1}$. Aus dem erhaltenen Thermogramm wurde die Onset-Temperatur $T_o$ unter Verwendung der Software STAR$^e$ 9.1. bzw. des Geräteherstellers bestimmt. Als Sensor ist der Typ FRS 5 verbaut mit 56 Thermoelementen und 15 $\mu$V/mW kalorischer Empfindlichkeit sowie 330 $\mu$V/K thermischer Empfindlichkeit.

Die Bestimmung des Molekulargewichts erfolgte mittels Gelpermeationschromatographie nach DIN 55672-1:2016-03 unter Verwendung von Polystyrol-Referenzproben. Als stationäre Phase diente eine PLgel 3 $\mu$m MIXED-E Säule der Fa. Agilent Technologies.

Als mobile Phase wurde Tetrahydrofuran verwendet. Die Proben hatten eine Konzentration von ca. 1 g/l bei 100 $\mu$l Injektionsvolumen und einer Flussrate von 0,5 ml/min. Die Auswertung erfolgte mittels eines Waters RI Detektors und der Win GPC7 Software.

Die Bestimmung der Doppelbindungsdichte in mol C=C/kg erfolgte mittels $^1$H-NMR-Spektrometrie gegen einen internen Standard (Dimethyltherephthalat in deuteriertem Chlorofom).

Die Bestimmung des Volumenschrumpfs erfolgte nach der Methode von Painter & Coleman, wie beschrieben in: M.M. Coleman, J.F. Graf, PC. Painter, "Specific Interactions and the Miscibility of Polymer Blends", Technomic Publishing Company, USA, 1991. Folgende Formel wurde zur Errechnung benutzt:

$$\text{Maximalschrumpf (\%)} = -2{,}58 + 3100 * (\text{Funktionalität} / \text{Molekulargewicht (Mn [g/mol])})$$

Diese Formel schätzt den Reaktionsschrumpf, ohne die Dichte der Einsatzstoffe in Betracht zu ziehen und ist als Vergleichsbasis nutzbar, kann jedoch um bis zu 20 % von der Realität abweichen.

Herstellung der Lackformulierungen F (allgemeine Vorschrift)

Die Herstellung der Lackformulierungen F erfolgte durch Vermischen der in der folgenden Tabelle 1 angegebenen Bestandteile bei 23 °C in einem Mischbecher. Die jeweilige Mischung wurde so lange homogenisiert, bis sie visuell klar war. Alle Mengenangaben in Tabelle 1 sind Gewichtsteile. Die physikochemischen Eigenschaften der Lackformulierungen sind in Tabelle 2 angegeben.

Tabelle 1: Zusammensetzung der Lackformulierungen

| Lackformulierung | F1 | F2 | F3 | F4 | F5 | F6 | F7 | F8 | F9 |
|---|---|---|---|---|---|---|---|---|---|
| Bestandteile (Gewichtsteile) | | | | | | | | | |
| PESA 1 | 20.0 | - | - | - | - | - | - | - | - |
| PEA 1 | 41.5 | - | - | - | - | - | - | - | - |
| UA 1 | - | 20.0 | - | - | - | - | - | - | - |
| PESA 2 | - | 41.5 | - | - | - | - | - | - | - |
| EA 1 | - | - | 60.0 | 80.0 | 60.0 | 80.0 | 100.0 | - | - |
| UA2 | - | - | 40.0 | 20.0 | 40.0 | 20.0 | - | - | - |

(fortgesetzt)

| Lackformulierung | F1 | F2 | F3 | F4 | F5 | F6 | F7 | F8 | F9 |
|---|---|---|---|---|---|---|---|---|---|
| EA 2 | - | - | - | - | - | - | - | 100.0 | 95.0 |
| Inertharz | - | - | - | - | - | - | - | - | 5.0 |
| PEA2 | 10.0 | 10.0 | - | - | - | - | - | - | - |
| DPGDA | 14.5 | 14.5 | - | - | - | - | - | - | - |
| TBCH | 10.0 | 10.0 | - | - | - | - | - | - | - |
| Mattierungsmittel | 3.0 | 3.0 | - | - | 0.75 | 0.75 | 0.75 | 0.75 | 0.75 |
| Mikronisierter Kaolin | - | - | - | - | 0.75 | 0.75 | 0.75 | 0.75 | 0.75 |
| M ikronisiertes Wachs | 0.3 | 0.3 | - | - | - | - | - | - | - |
| Fotoinitiator 1 | 0.5 | 0.5 | 0.5 | 0.5 | 0.5 | 0.5 | 0.5 | 0.5 | 0.5 |
| Fotoinitiator 2 | 0.2 | 0.2 | - | - | - | - | - | - | - |

Tabelle 2: Eigenschaften der Lackformulierungen

| Lackformulierung | F1 | F2 | F3 | F4 | F5 | F6 | F7 | F8 | F9 |
|---|---|---|---|---|---|---|---|---|---|
| Viskosität, [Pa·s] | 0,10 | 0,11 | 4,30 | 3,50 | 4,70 | 3,40 | 4,50 | 18,2 | 15,0 |
| Doppelbindungsdichte, [mol C=C/kg] | 3,8 | 5,6 | 3,6 | 4,1 | 3,6 | 4,1 | 4,5 | 3,8 | 3,3 |
| Volumenschrumpf, [%] | - | - | 6,59 | 7,57 | 6,59 | 7,57 | 8,55 | 7,41 | 7,04 |
| $\beta^{1)}$, [g/K/mol] | 1,29 | 0,72 | 1,40 | 1,20 | 1,38 | 1,18 | 0,98 | 1,11 | 1,05 |
| 1) $\beta$ ist der massenmittlere Quotient $\alpha/T_o$ über alle in der Lackformulierung enthaltenen härtbaren Bestandteile, berechnet anhand Formel (2). | | | | | | | | | |

Herstellung von Beschichtungen:

Die vorstehenden Lackformulierungen F1 - F9 wurden, sofern nichts anderes angegeben ist, mittels eines Spiralrakels jeweils in Schichtdicken von 6 g/m² auf Leneta s/w Karton (Form 2DX Brushout Cards) appliziert und anschließend nach folgenden Verfahren A1, A2, B1, B2, C1, C2 oder C3 mittels UV-Strahlung gehärtet.

Härtungsverfahren A1 (nicht erfindungsgemäß):

Schritt 1: Bestrahlung mit inkohärenter VUV-Strahlung bei 172 nm mit einem Eximer-Strahler XIS 375x96 der Fa. Osram, Leistung 185 W, Bestrahlungsleistung an der Lampenoberfläche 45 mW/cm², 5 cm Abstand der Lampenoberfläche zum Substrat, unter Spülen mit Stickstoff (ca. 500 ppm Umgebungsrestsauerstoff).
Schritt 2: Bestrahlung mit UV-Strahlung im Wellenlängenbereich 200 bis 450 nm, erzeugt durch einen Quecksilber-Mitteldruckstrahler der Firma IST Metz. Die Leistung des Strahlers wurde so eingestellt, dass die Strahlendosis auf der Substratoberfläche 1580 mJ/cm² betrug. Die Bestrahlung erfolgte unter Umgebungsatmosphäre.

Härtungsverfahren A2 (nicht erfindungsgemäß):

Das Verfahren A2 wurde analog zu Verfahren A1 durchgeführt, wobei man in Schritt 2 die Leistung des Strahlers so einstellte, dass die Strahlendosis auf der Substratoberfläche 1370 mJ/cm² betrug.

Härtungsverfahren B1 (erfindungsgemäß):

Schritt 1: Bestrahlung mit UVA-Strahlung bei 395 nm, erzeugt mit einem LED-Strahler der Firma Phoseon. Die Bestrahlung erfolgte unter Umgebungsatmosphäre. Die Leistung des Strahlers wurde so eingestellt, dass die Strahlendosis auf der Substratoberfläche 56 mJ/cm² betrug.
Schritt 2: Bestrahlung mit inkohärenter VUV-Strahlung bei 172 nm mit einem Eximer-Strahler XIS 375x96 der Fa. Osram, Leistung 185 W, Bestrahlungsleistung an der Lampenoberfläche 45 mW/cm$^2$, 5 cm Abstand der Lampenoberfläche zum Substrat, unter Spülen mit Stickstoff (ca. 1000 ppm Umgebungsrestsauerstoff).

Schritt 3: Bestrahlung mit UV-Strahlung im Wellenlängenbereich 200 bis 450 nm, erzeugt durch einen Quecksilber-Mitteldruckstrahler der Firma IST Metz. Die Leistung des Strahlers wurde so eingestellt, dass die Strahlendosis auf der Substratoberfläche 891 mJ/cm$^2$ betrug. Die Bestrahlung erfolgte unter Umgebungsatmosphäre.

Härtungsverfahren B2 (erfindungsgemäß):

Das Verfahren B2 wurde analog zu Verfahren B1 durchgeführt, wobei man in Schritt 1 die Leistung des Strahlers so einstellte, dass die Strahlendosis auf der Substratoberfläche 169 mJ/cm$^2$ betrug und in Schritt 3 die Leistung des Strahlers so einstellte, dass die Strahlendosis auf der Substratoberfläche 1370 mJ/cm$^2$ betrug.

Härtungsverfahren C1 (erfindungsgemäß):

Schritt 1: Bestrahlung mit UVA-Strahlung bei 395 nm, erzeugt mit einem LED-Strahler der Firma Phoseon. Die Bestrahlung erfolgte unter Umgebungsatmosphäre. Die Leistung des Strahlers wurde so eingestellt, dass die Strahlendosis auf der Substratoberfläche 56 mJ/cm$^2$ betrug.

Schritt 2: Bestrahlung mit inkohärenter VUV-Strahlung bei 172 nm mit einem Eximer-Strahler XIS 375x96 der Fa. Osram, Leistung 185 W, Bestrahlungsleistung an der Lampenoberfläche 45 mW/cm$^2$, 5 cm Abstand der Lampenoberfläche zum Substrat, unter Spülen mit Stickstoff (ca. 1000 ppm Umgebungsrestsauerstoff).

Schritt 3: Bestrahlung mit UVA-Strahlung bei 395 nm, erzeugt mit einem LED-Strahler der Firma Phoseon. Die Bestrahlung erfolgte unter Umgebungsatmosphäre. Die Leistung des Strahlers wurde so eingestellt, dass die Strahlendosis auf der Substratoberfläche 453 mJ/cm$^2$ betrug.

Härtungsverfahren C2 (erfindungsgemäß):

Das Verfahren C2 wurde analog zu Verfahren C1 durchgeführt, wobei man in Schritt 3 die Leistung des Strahlers so einstellte, dass die Strahlendosis auf der Substratoberfläche 360 mJ/cm$^2$ betrug.

Härtungsverfahren C3 (erfindungsgemäß):

Das Verfahren C3 wurde analog zu Verfahren C1 durchgeführt, wobei man in Schritt 3 die Leistung des Strahlers so einstellte, dass die Strahlendosis auf der Substratoberfläche 235 mJ/cm$^2$ betrug.

Anwendungstechnische Prüfung:

Glanzgrad (GU):

Der Glanzgrad der Beschichtung auf den beschichteten Leneta s/w Folien wurde mit einem Micro-Gloss Glanzmessgerät der Fa. Byk bestimmt. Bestimmt wurde der Glanzgrad in Auftragsrichtung bei 60° (GU60) und bei 85° (GU85).

Soft-Feel Effekt (Gleitreibung GR):

Zur Bestimmung des Soft-Feel Effekts wurde anstelle auf Leneta s/w Karton der jeweilige Lack auf einer Glasplatte (Abmessung 18 x 32 cm) appliziert und ausgehärtet. Die so beschichtete Glasplatte wurde in eine Vorrichtung eingespannt, mit der der Anstellwinkel der Glasplatte verstellt werden konnte. Auf die beschichtete Glasplatte wurde dann ein 1 kg schweres, zylindrisches Gewicht (Grundfläche 20 cm$^2$) aufgelegt, das auf der Auflagefläche mit einem rutschfördernden Klebeetikett (Klebeetikett Fa. Avery; Zweckform 3425) beklebt war. Die Glasplatte wurde so lange kontinuierlich mit zunehmendem Neigungswinkel geneigt, bis das Gewicht anfing zu gleiten. Der Winkel wurde notiert. Der von der Glasplatte aufgespannt Winkel gilt als Maß für den Soft-Feel Effekt.

Martenshärte (MH):

Die Martenshärte der Beschichtung wurde nach DIN EN ISO 14577-1 durch Aufnahme einer Kraft-Eindringtiefe-Kurve mittels eines Fischercope H100 bestimmt. Hierzu wurde die jeweilige Lackformulierung mit 20 g/m$^2$ auf eine angelierte 200 g/m$^2$ starke Grundierschicht aus demselben Lack auf Glas aufgetragen und der so erhaltene Decklack wurde entsprechend den angegebenen Verfahren A, B1, C1, C2, oder C3 ausgehärtet. (Die Grundierungsschicht ist nötig, um die DIN-Vorgaben bzgl. Mindestschichtdicke zu erfüllen). Die Mikrohärte wurde hierbei bestimmt nach dem Verfahren der instrumentierten Eindringprüfung nach dem Unterverfahren der Eindringprüfung, begrenzt durch Maximalkraft mit einem Vickersdiamant als Eindringkörper. Die Martenshärte MH wird hierbei nach DIN folgendermaßen angegeben: HM X / Y1 / Z / Y2 = Ergebnis, wobei X = Prüfkraft [N], Y1 = Aufbringzeit der Prüfkraft [s], Z1 = Haltezeit bei maximaler Prüfkraft [N], Y2 = Aufbringzeit der Prüfkraft [s], Ergebnis = Martenshärte [N/mm$^2$].

Glanzverlust (Mikrokratzbeständigkeit MK):

Die Bestimmung des Glanzverlusts (Mikrokratzbeständigkeit) erfolgte nach DIN EN16094:2012-04 mittels eines Martindale Prüfgeräts bei einer Auflagekraft von 6 N, einer Gesamtmasse von 612 ± 2 g und einem Scheuerpad-Durchmesser von 9 cm. Als Scheuerpad wurde ein Scotchbride Pad der Fa. 3M mit der Bezeichnung SB7447 gewählt. Als Substrat diente eine 18 x 32 cm große Glasplatte, auf der die jeweilige Lackformulierung mit 6 g/m$^2$ aufgetragen und der so erhaltene Decklack entsprechend den angegebenen Verfahren A, B1, C1, C2, oder C3 ausgehärtet wurde. Angegeben ist der Glanz vor und nach der Behandlung in Glanzeinheiten bei 60° Geometrie.

Rauheit (RH):

Die Bestimmung der Rauheit erfolgte mittels Weißlichtinterferometrie. Angegeben ist die arithmetisch gemittelte Rautiefe R$_a$ in μm.
Die Weißlichtinterferometrie (WLI) ist eine schnelle optische, d. h. nicht taktile 3D-Oberflächenmesstechnik mit der höchsten vertikalen Auflösung aller optischer Methoden (Auflösung im Sub-Nanometer Bereich) und einer lateralen Auflösung, die mit Ausnahme der konfokalen Mikroskopie mit den meisten anderen optischen Methoden vergleichbar ist. Im Gegensatz zu taktilen Oberflächenmesstechniken hat die WLI Vorteile, durch die berührungslose Messung die Proben nicht zu beschädigen, wesentlich kürzere Messzeiten erzielen zu können, rauschärmere Daten zu generieren, Oberflächen durch transparente Medien hindurch charakterisieren zu können wie z. B. Glas oder Polymerfilme und zudem auf eine 3D-Bildgebung ausgelegt zu sein, anstatt auf einzelne Profilmessungen. Die transparenten und schwach reflektierende/stark Lichtabsorbierenden Proben wurden vor der Messung mit Gold bedampft. Als Objektive wurde ein 10X oder FOV: 1.0X verwendet und nach der dem Fachmann bekannten Messmethode VSI (ohne Filter) ausgewertet.
Die beschichteten Leneta-Folien wurden außerdem mittels Lichtmikroskopie bezüglich ihres Erscheinungsbilds bewertet. Hierzu wurde ein Lichtmikroskop Modell BH2-UMA der Fa. Olympus mit einem Olympus-Objektiv 103689 IC 50 verwendet.
Die Ergebnisse der Prüfung der Lackformulierungen F1 und F2 sind in Tabelle 3 zusammengestellt. Die Ergebnisse der Prüfung der Lackformulierungen F3 bis F9 finden sich in Tabelle 4.

Tabelle 3: Anwendungstechnische Prüfung der Lackformulierungen F1 und F2

| Lack | HV | GU60° | GU85° | GR [1] [°] | MH [2] [N/mm$^2$] | MK[3] | RH [4] [μm] | Beobachtungen[5] |
|---|---|---|---|---|---|---|---|---|
| F1 | A1 | 3,0 | 2,9 | 27 | n.B. | 1,0/1,3 | 4,52 | - |
| F1 | B1 | 2,3 | 7,6 | 32 | 4,5 | 0,9/1,1 | 5,20 | + |
| F1 | C1 | 1,9 | 6,9 | 34 | 4,7 | 1,0/1,1 | 4,83 | + |
| F1 | C2 | 2,1 | 6,7 | 32 | 4,6 | 1,0/1,1 | 4,34 | + |
| F1 | C3 | 2,0 | 6,3 | 32 | 4,5 | 1,0/1,1 | 4,38 | + |
| F2 | A | 7,0 | 9,7 | 20 | n.B. | 3,4/4,4 | 3,31 | - |
| F2 | B | 5,7 | 13 | 16 | 65,6 | 2,6/4,3 | 3,98 | + |
| F2 | C1 | 5,7 | 12 | 21 | 59,4 | 2,5/5,5 | 3,96 | + |
| F2 | C2 | 5,6 | 12 | 22 | 62,1 | 2,3/4,4 | 3,72 | + |
| F2 | C3 | 5,5 | 12 | 26 | 48,8 | 2,2/4,6 | 3,40 | + |

1) Gleitreibung bzw. Soft-Feel Effekt
2) Martenshärte: 0.2/30/30/30: HM X / Y1 / Z / Y2 = Ergebnis, wobei X = Prüfkraft [N], Y1 = Aufbringzeit der Prüfkraft [s], Z1 = Haltezeit bei maximaler Prüfkraft [N], Y2 = Aufbringzeit der Prüfkraft [s], Ergebnis = Martenshärte [N/mm$^2$].
3) Mikrokratzbeständigkeit: Glanz vor und nach Behandlung
4) Vergleich Glanz nachher/vorher bei 60° Winkelgeometrie mit einem Micro-Gloss Glanzmessgerät der Fa. Byk.
5) + = Oberfläche in Ordnung; - = Oberfläche nicht in Ordnung

Alle Formulierungen F1 und F2 liefern nach den erfindungsgemäßen Härtungsverfahren (B1), (C1), C2) und (C3) homogene, matte Oberflächen. Die Mattierung der erfindungsgemäßen Oberflächen schwankt zwischen den Härtungsverfahren (B1), (C1), C2) und (C3) geringfügig in den Grenzen der Fehlertoleranz der Messmethode. Die Haptik der Oberfläche F2 unterscheidet sich dabei in Abhängigkeit der Härtungsmethode und der aufgebrachten Härtungsenergie in der Endhärtung. Je geringer die Härtungsenergie, desto weicher und samtiger wirkt die Oberfläche, ohne dabei signifikanten Einfluss auf Glanzgrad, die hohe Beständigkeit oder Härte zu nehmen. Der ohnehin weiche Soft-Feel Lack F1 zeigt kaum Einfluss der Härtungstechnologie auf den Soft-Feel Effekt, da dieser generell schon auf sehr hohem Niveau liegt. Auch hier gibt es keinen signifikanten Einfluss auf den Glanzgrad, die hohe Beständigkeit oder Härte.

Der Soft-Feel Effekt lässt sich auch in Grenzen über die Rauheit und Strukturierung der Oberfläche beschreiben. Formulierung F1 zeigt generell etwas höhere Werte der arithmetisch gemittelten Rauheit $RH_a$ gegenüber Formulierung F2. Alle Filme zeigen nach den erfindungsgemäßen Prozessen (B) und (C) eine ähnliche Strukturierung der Oberfläche nahe einer Normalverteilung, ohne signifikante Ausreißer in der Asymmetrie (Skewness) und Wölbung (Kurtosis), was den Schluss zulässt, dass das unterschiedliche haptische Feedback einzig durch die Rauheit und Lackchemie erklärt werden kann.

Härtung folgend dem vergleichenden Prozess (A1) führt in beiden Lacken F1 und F2 zu inhomogenen Oberflächen (Eisblumen-Optik) mit höherem Glanzgrad und ohne Soft-Feel Effekt.

Tabelle 4: Anwendungstechnische Prüfung der Lackformulierungen F3 bis F9

| Lack | HV | GU60° | GU85° | RH $R_a$ [μm] | Beobachtungen( |
|---|---|---|---|---|---|
| F3 | A2 | 9,0 | 12,1 | 6,46 | Oberfläche n.i.O.: Inhomogen, starke Schollenbildung |
| F3 | B2 | 10,3 | 23,6 | 4,38 | Oberfläche i.O.: Homogene aber raue Strukturierung |
| F4 | A2 | 14,3 | 22,1 | 3,94 | Oberfläche n.i.O.: Inhomogen, starke Schollenbildung |
| F4 | B2 | 17,4 | 39,5 | 2,84 | Oberfläche i.O.: homogene, aber raue Strukturierung |
| F5 | A2 | 6,5 | 7,2 | 6,71 | Oberfläche n.i.O.: Inhomogen, leichte Schollenbildung |
| F5 | B2 | 6,7 | 8,1 | 5,54 | Oberfläche i.O.: Homogene, feine Strukturierung |
| F6 | A2 | 15,3 | 19,8 | 4,03 | Oberfläche n.i.O.: Inhomogen, leichte Schollenbildung |
| F6 | B2 | 13,4 | 34,3 | 2,84 | Oberfläche i.O.: Homogene, feine Strukturierung |
| F7 | B2 | 21,8 | 71,5 | 1,66 | Oberfläche i.O.: Homogene, feine Strukturierung |
| F8 | B2 | 32,0 | 77,6 | 1,26 | Oberfläche i.O.: Homogene, feine Strukturierung |
| F9 | B2 | 63,8 | 93,8 | 0,74 | Oberfläche i.O.: Homogene, feine Strukturierung |

Die unter Verwendung der Lackformulierungen F3 bis F9 nach dem Härtungsverfahren B2 hergestellten Beschichtungen zeigen alle homogene, mehr (F5 - F9) oder weniger (F3, F4) fein strukturierte Oberflächen ohne Ausbildung einer Eisblumenstruktur. In Abhängigkeit der Wahl der Rohstoffe lässt sich der Mattierungsgrad der Formulierungen gehärtet nach Verfahren (B2) steuern. Einflussgröße dabei ist insbesondere der Anteil an aromatischem Epoxyacrylat. Je höher der Anteil an Epoxyacrylat ist, desto höher wird der Glanz. Parameter, wie Doppelbindungsdichte, der theoretische Reaktionsschrumpf und die Viskosität der Formulierung, spielen auch eine Rolle. Je höher die Doppelbindungsdichte und die Viskosität bzw. je geringer der theoretische Reaktionsschrumpf, desto höher der resultierende Glanz. Schlüsselelement zur Einstellung des Glanzgrades ist dabei aber der Anteil des aromatischen Epoxyacrylates. Die Homogenität der Beschichtung wird vorzugsweise durch ausgleichende Maßnahmen, wie den Einsatz von zusätzlichem Mattierungsmittel, eingestellt, um die Gefahr einer gröberen Strukturierung zu vermindern.

**Patentansprüche**

1. Verfahren zur Herstellung matter Beschichtungen auf flächigen Substraten, umfassend die aufeinander folgenden Schritte i. - iv.,

   i. Bereitstellen einer ungehärteten Lackschicht einer durch UV-Strahlung härtbaren, flüssigen Lackformulierung F auf der Oberfläche des zu beschichteten Substrats;
   ii. Bestrahlung der Lackschicht mit UV-Strahlung, die im Wesentlichen im Wellenlängenbereich von 250 bis 420 nm liegt, mit einer Strahlendosis, die zu einer Teilhärtung der Lackschicht führt;

iii. Bestrahlung der teilgehärteten Lackschicht mit UV-Strahlung im Wellenlängenbereich von 150 bis < 250 nm unter Inertgas;

iv. Bestrahlung der teilgehärteten Lackschicht mit UV-Strahlung, die im Wesentlichen im Wellenlängenbereich von 250 bis 420 nm liegt, oder mit Elektronenstrahlung, mit einer Strahlendosis, die zu Aushärtung der Lackschicht führt;

wobei die Lackformulierung F zu wenigstens 80 Gew.-%, bezogen auf das Gesamtgewicht der die Beschichtung bildenden Bestandteile der Lackformulierung F, aus einem oder mehreren härtbaren Bestandteilen besteht, die ethylenisch ungesättigte Doppelbindungen aufweisen,

die Lackformulierung F außerdem wenigstens einen Photoinitiator enthält,

wobei die Lackformulierung F wenigstens ein Oligomer oder Polymer, das im Mittel wenigstens 1,5 ethylenische Doppelbindungen pro Molekül trägt und ein zahlenmittleres Molekulargewicht $M_n$ von wenigstens 450 Dalton aufweist, enthält, und

wobei die Lackformulierung F wenigstens eines der folgenden Merkmale (A), (B) oder (C) und gegebenenfalls das Merkmal (D) erfüllt:

(A) Die Anzahl ethylenisch ungesättigter Doppelbindungen, bezogen auf die in der Lackformulierung F enthaltenen, die Beschichtung bildenden Bestandteile, liegt im Bereich von 3,0 bis 8,0 mol/kg;

(B) die Lackformulierung F enthält wenigstens 30 Gew.-%, bezogen auf die darin enthaltenen härtbaren Bestandteile, ein Oligomer oder Polymer oder ein Gemisch von Oligomeren und/oder Polymeren, bei dem der Quotient $\alpha/T_o$ von berechneter Netzbogenlänge $\alpha$ in g/mol zu der Onset-Temperatur $T_o$ in Kelvin des Glasübergangs, bestimmt mittels Dynamischer Differenzthermoanalyse nach DIN EN ISO 11357-2:2014, wenigstens 1,2 beträgt;

(C) der massenmittlere Quotient $\alpha/T_o$, gemittelt über die Gewichtsanteile aller härtbaren Bestandteile der Lackformulierung F, beträgt wenigstens 1,0;

(D) die Lackformulierung F enthält wenigstens ein aromatisches Epoxyacrylat in einer Menge von wenigstens 20 Gew.-%, bezogen auf das Gesamtgewicht der in der Lackformulierung F enthaltenen härtbaren Bestandteile.

2. Verfahren nach Anspruch 1, wobei die Bestrahlung in Schritt ii. mit UV-Strahlung mit einer Strahlendosis im Bereich von 20 bis 200 mJ/cm$^2$ erfolgt, wobei die UV-Strahlung im Wesentlichen im Wellenlängenbereich von 350 bis 420 nm liegt.

3. Verfahren nach Anspruch 1 oder 2, wobei die Bestrahlung in Schritt ii. unter einer sauerstoffhaltigen Atmosphäre erfolgt.

4. Verfahren nach einem der vorhergehenden Ansprüche, wobei die Bestrahlung in Schritt iii. im Wellenlängenbereich von 150 bis 230 nm erfolgt und wobei die Bestrahlung in Schritt iv. mit UV-Strahlung erfolgt, die im Wesentlichen im Wellenlängenbereich von 350 bis 420 nm liegt.

5. Verfahren nach einem der vorhergehenden Ansprüche, wobei die Lackformulierung F eine nicht-wässrige Lackformulierung ist, die zu wenigstens 80 Gew.-%, bezogen auf das Gesamtgewicht der Lackformulierung F, aus einem oder mehreren Bestandteilen besteht, die ethylenisch ungesättigte Doppelbindungen aufweisen.

6. Verfahren nach einem der vorhergehenden Ansprüche, wobei man die Lackformulierung F in einer solchen Menge auf die Oberfläche des zu beschichteten Substrats aufbringt, dass nach dem Härten eine Schichtdicke von 3 bis < 20 $\mu$m, insbesondere in einer Schichtdicke von 3 bis 15 $\mu$m resultiert.

7. Verfahren nach einem der vorhergehenden Ansprüche, wobei in der Lackformulierung F die ethylenisch ungesättigten Doppelbindungen der darin enthaltenen Bestandteile zu wenigstens 90 mol-%, bezogen auf die Gesamtmenge der in der Zusammensetzung enthaltenen ethylenisch ungesättigten Doppelbindungen in Form von Acrylatgruppen vorliegen.

8. Verfahren nach einem der vorhergehenden Ansprüche, wobei die Lackformulierung F wenigstens ein Oligomer als Hauptbestandteil enthält, das unter aliphatischen Urethan(meth)acrylaten, aliphatischen Polyether(meth)acrylaten, aliphatischen Polyester(meth)acrylaten, aliphatischen Polycarbonat(meth)acrylaten und deren Mischungen ausgewählt ist.

9. Verfahren nach einem der vorhergehenden Ansprüche, wobei die Lackformulierung F zusätzlich wenigstens ein Monomer enthält, das im Mittel 1 bis 3 ethylenische Doppelbindungen pro Molekül trägt und ein zahlenmittleres Molekulargewicht $M_n$ < 450 Dalton aufweist.

10. Verfahren nach einem der vorhergehenden Ansprüche, wobei die Bestrahlung in Schritt iv. mit einer Strahlendosis im Bereich von 150 bis 600 mJ/cm$^2$ erfolgt.

11. Verfahren nach einem der vorhergehenden Ansprüche, wobei die Lackformulierung F das Merkmal (D) erfüllt.

12. Verfahren nach Anspruch 11, wobei das aromatische Epoxyacrylat ausgewählt ist unter den Umsetzungsprodukten von aromatischen Gycidylethern, mit Hydroxyalkylacrylaten und/oder Acrylsäure.

13. Verfahren nach einem der Ansprüche 11 oder 12, wobei die Lackformulierung F wenigstens ein Additiv enthält, das unter Mattierungsmitteln, Wachsen und Inertharzen ausgewählt ist.

14. Verfahren nach einem der vorhergehenden Ansprüche, wobei die Lackformulierung F wenigstens einen Photoinitiator enthält, der wenigstens eine Absorptionsbande mit einem Maximum $\lambda_{max}$ im Bereich von 340 bis 420 nm und speziell im Bereich von 350 bis 410 nm aufweist und zusätzlich wenigstens einen Photoinitiator enthält, der wenigstens eine Absorptionsbande mit einem Maximum $\lambda_{max}$ im Bereich von 220 bis 340 nm und speziell im Bereich von 230 bis 320 nm aufweist.

15. Verfahren nach einem der vorhergehenden Ansprüche, wobei das zu beschichtende Substrat ein flächiges, nicht poröses Substrat ist.

**Claims**

1. A method for producing matt coatings on sheetlike substrates, comprising the consecutive steps i. - iv.,

   i. providing an uncured coating film of a liquid coating formulation F, curable by UV radiation, on the surface of the substrate to be coated;
   ii. irradiating the coating film with UV radiation which lies substantially in the wavelength range from 250 to 420 nm, with a radiation dose which leads to partial curing of the coating film;
   iii. irradiating the partially cured coating film with UV radiation in the wavelength range from 150 to < 250 nm under inert gas;
   iv. irradiating the partially cured coating film with UV radiation which lies substantially in the wavelength range from 250 to 420 nm, or with electron beams, with a radiation dose which leads to full curing of the coating film;

   wherein the coating formulation F consists to an extent of at least 80 wt%, based on the total weight of the coating-forming constituents of the coating formulation F, of one or more curable constituents which have ethylenically unsaturated double bonds,
   the coating formulation F further comprises at least one photoinitiator,
   wherein the coating formulation F comprises at least one oligomer or polymer which carries on average at least 1.5 ethylenic double bonds per molecule and has a number-average molecular weight $M_n$ of at least 450 daltons, and wherein the coating formulation F fulfills at least one of the following features (A), (B) or (C) and optionally feature (D) :

   (A) the number of ethylenically unsaturated double bonds, based on the coating-forming constituents present in the coating formulation F, is in the range from 3.0 to 8.0 mol/kg;
   (B) the coating formulation F comprises at least 30 wt%, based on the curable constituents present therein, of an oligomer or polymer or of a mixture of oligomers and/or polymers wherein the ratio $\alpha/T_o$ of calculated network arc length $\alpha$ in g/mol to the onset temperature $T_o$ in kelvins of the glass transition, determined by means of differential scanning calorimetry according to DIN EN ISO 11357-2:2014, is at least 1.2;
   (C) the mass-average ratio $\alpha/T_o$, averaged over the weight fractions of all curable constituents of the coating formulation F, is at least 1.0;
   (D) the coating formulation F comprises at least one aromatic epoxy acrylate in an amount of at least 20 wt%, based on the total weight of the curable constituents present in the coating formulation F.

2. The method according to claim 1, wherein the irradiation in step ii. takes place with UV radiation with a radiation dose in the range from 20 to 200 mJ/cm$^2$, the UV radiation lying substantially in the wavelength range from 350 to 420 nm.

3. The method according to claim 1 or 2, wherein the irradiation in step ii. takes place under an oxygen-containing atmosphere.

4. The method according to any of the preceding claims, wherein the irradiation in step iii. takes place in the wavelength range from 150 to 230 nm and wherein the irradiation in step iv. takes place with UV radiation which lies substantially in the wavelength range from 350 to 420 nm.

5. The method according to any of the preceding claims, wherein the coating formulation F is a nonaqueous coating formulation which consists to an extent of at least 80 wt%, based on the total weight of the coating formulation F, of one or more constituents which have ethylenically unsaturated double bonds.

6. The method according to any of the preceding claims, wherein the coating formulation F is applied to the surface of the substrate to be coated, in an amount such that, after curing, the resulting film thickness is from 3 to < 20 um, more particularly from 3 to 15 $\mu$m.

7. The method according to any of the preceding claims, wherein, in the coating formulation F, the ethylenically unsaturated double bonds of the constituents present therein are present to an extent of at least 90 mol%, based on the total amount of the ethylenically unsaturated double bonds present in the composition, in the form of acrylate groups.

8. The method according to any of the preceding claims, wherein the coating formulation F comprises as principal constituent at least one oligomer selected from aliphatic urethane (meth)acrylates, aliphatic polyether (meth)acrylates, aliphatic polyester (meth)acrylates, aliphatic polycarbonate (meth)acrylates, and mixtures thereof.

9. The method according to any of the preceding claims, wherein the coating formulation F further comprises at least one monomer which carries on average 1 to 3 ethylenic double bonds per molecule and has a number-average molecular weight $M_n$ < 450 daltons.

10. The method according to any of the preceding claims, wherein the irradiation in step iv. takes place with a radiation dose in the range from 150 to 600 mJ/cm$^2$.

11. The method according to any of the preceding claims, wherein the coating formulation F fulfills feature (D).

12. The method according to claim 11, wherein the aromatic epoxy acrylate is selected from the reaction products of aromatic glycidyl ethers with hydroxyalkyl acrylates and/or acrylic acid.

13. The method according to either of claims 11 and 12, wherein the coating formulation F comprises at least one additive selected from matting agents, waxes, and inert resins.

14. The method according to any of the preceding claims, wherein the coating formulation F comprises at least one photoinitiator which has at least one absorption band having a maximum $\lambda_{max}$ in the range from 340 to 420 nm and specifically in the range from 350 to 410 nm and further comprises at least one photoinitiator which has at least one absorption band having a maximum $\lambda_{max}$ in the range from 220 to 340 nm and specifically in the range from 230 to 320 nm.

15. The method according to any of the preceding claims, wherein the substrate to be coated is a sheetlike, nonporous substrate.

**Revendications**

1. Procédé de réalisation de revêtements mats sur des substrats plats, comprenant les étapes successives suivantes i. - iv.,

i. mise à disposition d'une couche de vernis non durcie d'une formulation de vernis F liquide, durcissable par un rayonnement UV sur la surface du substrat à revêtir ;

ii. exposition de la couche de vernis à un rayonnement UV qui se situe sensiblement dans la plage de longueurs d'onde de 250 à 420 nm, avec une dose de rayons, qui entraîne un durcissement partiel de la couche de vernis ;

iii. exposition de la couche de vernis partiellement durcie à un rayonnement UV dans la plage de longueurs d'onde de 150 à < 250 nm sous un gaz inerte ;

iv. exposition de la couche de vernis partiellement durcie à un rayonnement UV qui se situe sensiblement dans la plage de longueurs d'onde de 250 à 420 nm ou à un rayonnement électronique, avec une dose de rayons, qui entraîne le durcissement de la couche de vernis ;

la formulation de vernis F étant constituée, à raison d'au moins 80% en poids, par rapport au poids total des constituants de la formulation de vernis F formant le revêtement, d'un ou de plusieurs constituants durcissables qui présentent des doubles liaisons éthyléniquement insaturées,

la formulation de vernis F contenant en outre au moins un photo-initiateur, la formulation de vernis F contenant au moins un oligomère ou polymère, qui porte en moyenne au moins 1,5 double liaison éthylénique par molécule et présentant un poids moléculaire moyen en nombre $M_n$ d'au moins 450 daltons, et

la formulation de vernis F répondant à au moins l'une des caractéristiques suivantes (A), (B) ou (C) et le cas échéant la caractéristique (D) :

(A) le nombre de doubles liaisons éthyléniquement insaturées, par rapport aux constituants contenus dans la formulation de vernis F, formant le revêtement, se situe dans la plage de 3,0 à 8,0 moles/kg ;

(B) la formulation de vernis F contient au moins 30% en poids, par rapport aux constituants durcissables qui y sont contenus, d'un oligomère ou polymère ou d'un mélange d'oligomères et/ou de polymères, dans lequel le quotient $\alpha/T_o$ de la longueur d'arc du réseau $\alpha$ en g/mole à la température de démarrage $T_o$ en Kelvin de la transition vitreuse, déterminée au moyen de la thermoanalyse différentielle dynamique selon la norme DIN EN ISO 11357-2:2014, vaut au moins 1,2 ;

(C) le quotient moyen en masse $\alpha/T_o$, moyenné sur les proportions en poids de tous les constituants durcissables de la formulation de vernis F vaut au moins 1,0 ;

(D) la formulation de vernis F contient au moins un époxyacrylate aromatique en une quantité d'au moins 20% en poids, par rapport au poids total des constituants durcissables contenus dans la formulation de vernis F.

2. Procédé selon la revendication 1, l'exposition dans l'étape ii. à un rayonnement UV étant effectuée avec une dose de rayons dans la plage de 20 à 200 mJ/cm$^2$, le rayonnement UV se situant sensiblement dans la plage de longueurs d'onde de 350 à 420 nm.

3. Procédé selon la revendication 1 ou 2, l'exposition dans l'étape ii. étant effectuée sous une atmosphère contenant de l'oxygène.

4. Procédé selon l'une des revendications précédentes, l'exposition dans l'étape iii. étant effectuée dans la plage de longueurs d'onde de 150 à 230 nm et l'exposition dans l'étape iv. étant effectuée par un rayonnement qui se situe sensiblement dans la plage de longueurs d'onde de 350 à 420 nm.

5. Procédé selon l'une des revendications précédentes, la formulation de vernis F étant une formulation de vernis non aqueuse, qui est constituée, à raison d'au moins 80% en poids, par rapport au poids total de la formulation de vernis F, par un ou plusieurs constituants qui présentent des doubles liaisons éthyléniquement insaturées.

6. Procédé selon l'une des revendications précédentes, le formulation de vernis F étant appliquée à la surface du substrat à revêtir en une quantité telle qu'on obtient, après le durcissement, une épaisseur de couche de 3 à < 20 um, en particulier une épaisseur de couche de 3 à 15 $\mu$m.

7. Procédé selon l'une des revendications précédentes, les doubles liaisons éthyléniquement insaturées des constituants contenus dans la formulation de vernis F se trouvant à raison d'au moins 90% en poids, par rapport à la quantité totale des doubles liaisons éthyléniquement insaturées contenues dans la composition, sous forme de groupes acrylate.

8. Procédé selon l'une des revendications précédentes, la formulation de vernis F contenant au moins un oligomère comme constituant principal, qui est choisi parmi les (méth)acrylates d'uréthane aliphatiques, les (méth)acrylates de polyéther aliphatiques, les (méth)acrylates de polyester aliphatiques, les (méth)acrylates de polycarbonate aliphatiques et leurs mélanges.

9. Procédé selon l'une des revendications précédentes, la formulation de vernis F contenant en plus au moins un monomère qui porte en moyenne 1 à 3 doubles liaisons éthyléniques par molécule et qui présente un poids moléculaire moyen en nombre $M_n$ < 450 daltons.

10. Procédé selon l'une des revendications précédentes, l'exposition dans l'étape iv. étant effectuée avec une dose de rayons dans la plage de 150 à 600 mJ/cm$^2$.

11. Procédé selon l'une des revendications précédentes, la formulation de vernis F répondant à la caractéristique (D) .

12. Procédé selon la revendication 11, l'époxyacrylate aromatique étant choisi parmi les produits de transformation de glycidyléthers aromatiques avec des acrylates d'hydroxyalkyle et/ou de l'acide acrylique.

13. Procédé selon l'une des revendications 11 ou 12, la formulation de vernis F contenant au moins un additif choisi parmi les agents de matage, les cires et les résines inertes.

14. Procédé selon l'une des revendications précédentes, la formulation de vernis F contenant au moins un photo-initiateur, qui présente au moins une bande d'absorption présentant un maximum $\lambda_{max}$ dans la plage de 340 à 420 nm et spécialement dans la plage de 350 à 410 nm et en plus au moins un photo-initiateur, qui présente au moins une bande d'absorption présentant un maximum $\lambda_{max}$ dans la plage de 220 à 340 nm et spécialement dans la plage de 230 à 320 nm.

15. Procédé selon l'une des revendications précédentes, le substrat à revêtir étant un substrat plat non poreux.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19842510
- DE 102006042063
- WO 2013092521 A
- WO 2016186728 A
- US 7649074 B2

**In der Beschreibung aufgeführte Nicht-Patentliteratur**

- **P. GLÖCKNER et al.** Radiation Curing for Coatings and Printing Inks. Vincentz Network GmbH, 2008
- **SCHUBERT et al.** *Farbe + Lack,* 2011, vol. 117 (5), 21
- **BAUER et al.** *Progress in Org. Coatings,* 2010, vol. 69, 287-293
- **BAUER et al.** *Progress in Org. Coatings,* 2009, vol. 64, 474-481
- **JOHAN BIELEMAN.** Lackadditive. Wiley-VCH, 1998
- Paints, Coatings and Solvents. Wiley-VCH, 1998, 327-373
- An Overview. **R. STEPHEN DAVIDSON.** Exploring the Science, Technology and Applications of U.V. and E.B. Curing. Sita Technology Ltd, 1999, 16
- **PETER KLAMANN.** eltosch System-Kompetenz, UV-Technik, Leitfaden für Anwender. Oktober 1998, 2
- **M.M. COLEMAN ; J.F. GRAF ; PC. PAINTER.** Specific Interactions and the Miscibility of Polymer Blends. Technomic Publishing Company, 1991